(19) Europäisches Patentamt
European Patent Office
Office européen des brevets

(11) **EP 4 482 243 B1**

(12) **FASCICULE DE BREVET EUROPEEN**

(45) Date de publication et mention de la délivrance du brevet:
**25.02.2026   Bulletin 2026/09**

(51) Classification Internationale des Brevets (IPC):
**H04W 72/54** *(2023.01)*      **H04W 84/18** *(2009.01)*
**H04W 72/0457** *(2023.01)*

(21) Numéro de dépôt: **24182734.4**

(22) Date de dépôt: **18.06.2024**

(52) Classification Coopérative des Brevets (CPC):
**H04W 72/54; H04W 72/0457; H04W 84/18**

(54) **PROCÉDÉ DE COMMUNICATIONS HYBRIDES NOMA/TDMA POUR RÉSEAUX AD HOC CLUSTERISÉS**

VERFAHREN ZUR HYBRIDEN NOMA/TDMA-KOMMUNIKATION FÜR CLUSTER-AD-HOC-NETZWERKE

HYBRID NOMA/TDMA COMMUNICATIONS METHOD FOR CLUSTERED AD HOC NETWORKS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **19.06.2023   FR 2306291**

(43) Date de publication de la demande:
**25.12.2024   Bulletin 2024/52**

(73) Titulaires:
- **Thales**
  **92190 Meudon (FR)**
- **CentraleSupélec**
  **91190 Gif-sur-Yvette (FR)**
- **Centre National de la Recherche Scientifique**
  **75016 Paris (FR)**
- **Université Paris-Saclay**
  **91190 Gif-sur-Yvette (FR)**

(72) Inventeurs:
- **JIA, David**
  **92622 Gennevilliers Cedex (FR)**
- **LE MARTRET, Christophe**
  **92622 Gennevilliers Cedex (FR)**
- **LETURC, Xavier**
  **92622 Gennevilliers Cedex (FR)**

- **ASSAAD, Mohamad**
  **91192 Gif-sur-Yvette (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
- **WEI XINCHEN ET AL: "Resource Allocation Technique for Hybrid TDMA-NOMA System with Opportunistic Time Assignment", 2020 IEEE INTERNATIONAL CONFERENCE ON COMMUNICATIONS WORKSHOPS (ICC WORKSHOPS), IEEE, 7 June 2020 (2020-06-07), pages 1 - 6, XP033796254, DOI: 10.1109/ ICCWORKSHOPS49005.2020.9145342**
- **ZHANG RONGHAIXIANG ET AL: "Minimum Throughput Maximization for Peer-Assisted NOMA-Plus-TDMA Symbiotic Radio Networks", IEEE WIRELESS COMMUNICATIONS LETTERS, IEEE, PISCATAWAY, NJ, USA, vol. 10, no. 9, 26 May 2021 (2021-05-26), pages 1847 - 1851, XP011876079, ISSN: 2162-2337, [retrieved on 20210907], DOI: 10.1109/LWC.2021.3083841**

**Description**

**Domaine technique** :

L'invention se situe dans le domaine des communications radio réalisées dans des réseaux dits ad-hoc clusterisés. Elle porte plus particulièrement sur un procédé permettant de sélectionner un type d'accès multiple pour les liens de communication de manière à accroître le débit du réseau dans différentes situations par rapport à un fonctionnel classique de type TDMA (sigle anglais pour *Time Division Multiple Access,* ou accès multiple par répartition temporelle).

**Technique antérieure** :

Les réseaux ad hoc, ou MANET (acronyme anglais pour *Mobile Ad hoc Network, ou réseau mobile ad hoc),* sont des réseaux sans fil ne s'appuyant pas sur une infrastructure avec des points d'accès fixes, contrairement aux réseaux cellulaires. Chaque nœud du réseau participe au routage des données, en les retransmettant aux autres nœuds. Le choix des nœuds impliqués dans une transmission est opéré dynamiquement, sur la base de la connectivité du réseau. Les réseaux ad hoc sont donc des réseaux auto-configurants et dynamiques, dans lesquels les nœuds sont libres de se déplacer. Ils sont utilisés lorsqu'il est nécessaire de déployer rapidement un réseau de communications radio dans une zone où l'infrastructure des réseaux cellulaires est insuffisante ou inaccessible. Ce peut être le cas par exemple pour les forces de sécurité civiles (pompiers, police, ambulances, ...) lors de manifestations sportives ou spectacles, d'évènements particuliers ou de catastrophes, pour des aéroports, ou pour des militaires sur le terrain d'opération.
Les réseaux ad hoc sont amenés à être déployés en masse dans les futurs réseaux de télécommunications, afin de créer des sous-bulles de haute connectivité pour relier des objets connectés. C'est déjà le cas avec les radiocommunications de cinquième génération (5G), où a été introduite la notion de *Flying Ad hoc networks* (FANET), ou réseaux ad hoc volants, pour le contrôle de drones. Les réseaux VANET (acronyme anglais pour *Vehicular Ad hoc Network,* ou réseau ad hoc véhiculaire), sont utilisés pour modéliser des systèmes de gestion de trafic routier et de partage d'informations entre véhicules pour améliorer la sécurité routière. Les réseaux SPAN (acronyme anglais pour *Smart-Phone Ad hoc Network,* ou réseau ad hoc pour smartphone) sont des réseaux ad hoc basés principalement sur les technologies Wi-Fi et bluetooth.
Au sein des réseaux ad hoc, des clusters sont formés, qui correspondent à des regroupements de nœuds, souvent sur des critères de proximité. Les allocations de clusters peuvent se faire par configuration (pour créer des groupes opérationnels) ou dynamiquement en fonction de la proximité des nœuds, de leurs capacités et de leurs besoins. Des ressources fréquentielles (canaux logiques de communication) sont attribuées à chaque cluster de manière à minimiser les interférences entre clusters. Au sein d'un cluster, un nœud élu joue le rôle de coordinateur. Ce nœud est est responsable de la gestion du cluster : ajout ou suppression de nœuds, et allocation de ressources. Des passerelles peuvent être créées entre les différents clusters pour garantir la connectivité des nœuds sur l'ensemble du réseau.
Au sein d'un cluster, les allocations de ressources sont généralement réalisées selon un schéma d'accès multiple de type TDMA, où une trame, représentant les instants d'émission des nœuds dans le temps, est divisée en intervalles appelés slots attribués chacun exclusivement à un lien de communication particulier. Les accès TDMA permettent de garantir que les liens communiquent de manière orthogonale sans créer d'interférences. La contrepartie est que les performances obtenues en termes de débits sont sous-optimales puisqu'ils ne prennent pas en compte la capacité de plusieurs utilisateurs à émettre simultanément.
Il existe d'autres techniques de contrôle d'accès pouvant également être appliquées aux réseaux ad hoc, en particulier les techniques d'accès multiples dites NOMA (acronyme anglais pour *Non Orthogonal Multiple Access,* ou accès multiple non orthogonal). Ces techniques consistent à combiner gestion de puissance à l'émission et suppression successive des interférences (en anglais SIC pour *Successive Interference Cancellation*) à la réception. Elles sont utilisées par exemple dans le LTE Advanced (sigle anglais pour *Long Term Evolution - Advanced,* une norme de réseaux cellulaires), ou dans le standard ATSC 3.0 (sigle anglais pour *Advanced Television Systems Committee,* standard de télévision numérique). Les accès multiples de type NOMA ont également été considérés comme des candidats pertinents pour les applications 5G.
Les techniques d'accès multiple de type NOMA ne garantissent pas l'absence d'interférences entre les liens de communication, mais traitent les signaux de manière à ce que les sources puissent être dissociées par le récepteur. Les techniques NOMA permettent d'activer plusieurs liens émettant simultanément, et sont associées des opérations de précodage/décodage permettant de supprimer les interférences à la réception. Si la longueur du précodeur (en termes de nombre de slots TDMA) est inférieure au nombre de slots nécessaires pour faire communiquer le même nombre de liens en TDMA, alors le débit global est augmenté. Toutefois, selon la configuration des liens dans le cluster, la solution NOMA peut être moins bonne que la solution TDMA (en termes de SNR, sigle anglais pour *Signal to Noise Ratio,* ou rapport signal à bruit). En outre, elle ne permet pas de garantir un débit minimum. Il n'est donc pas envisageable de mettre en œuvre une méthode de communications basée uniquement sur des accès multiples de type NOMA sans avoir recours à des procédés de gestion de puissance d'émission pour chaque nœud du cluster, possibles dans le cas d'un réseau cellulaire mais complexes à mettre en œuvre au sein des réseaux ad hoc.

Un objet de l'invention est donc de définir une méthode permettant d'améliorer le débit global d'un réseau ad hoc par rapport à une solution utilisant un accès réseau de type TDMA, tout en garantissant un débit minimal par lien. Pour cela, le procédé objet de la présente invention propose de combiner les techniques d'accès NOMA et TDMA de manière à tirer profit du meilleur des deux en toute situation.

Le document R. V. Bhat, M. Motani and T. J. Lim, "Hybrid NOMA for an Energy Harvesting MAC With Non-Ideal Batteries and Circuit Power," in IEEE Transactions on Wireless Communications, vol. 18, no. 8, pp. 3961-3973, Aug. 2019, doi: 10.1109/TWC.2019.2919827, décrit un système de communications hybride NOMA/TDMA pour un système de communications non ad hoc. Dans ce document, les allocations des canaux logiques à des communications TDMA ou NOMA sont faites de manière à maximiser le débit total avec une contrainte de puissance et de consommation de batterie. Cependant, les calculs nécessitent une connaissance du canal instantané de l'ensemble des liens radio, qui n'est pas nécessairement possible pour des réseaux ad hoc en raison des possibles fluctuations rapides du canal, des latences de transmission dans les réseaux ad hoc et des capacités limitées d'échange de signalisation. En outre, la résolution se fait par une méthode complexe en calculs et sous-optimale (en considérant un optimum local seulement).

Le document WEI XINCHEN ET AL: "Resource Allocation Technique for Hybrid TDMA-NOMA System with Opportunistic Time Assignment",2020 IEEE INTERNATIONAL CONFERENCE ON COMMUNICATIONS WORKSHOPS (ICC WORKSHOPS), IEEE, 7 juin 2020 (2020-06-07), pages 1-6, XP033796254, décrit aussi un exemple de l'art antérieur .

Un autre objet de l'invention est donc de proposer une méthode permettant de prendre des décisions quant au système d'accès à utiliser et à l'ordonnancement des accès TDMA et NOMA qui soit simple à implémenter, et ne nécessite que peu d'échanges au sein du réseau, en particulier en ne s'appuyant pas sur une connaissance du canal instantané de propagation des liens radios.

**Résumé de l'invention** :

A cet effet, la présente invention décrit un procédé de détermination d'un mode d'accès multiple et d'ordonnancement pour une pluralité de liens de communication dans un réseau ad hoc comprenant une pluralité de nœuds regroupés dans un ou plusieurs clusters, les liens de communication étant opérés sur au moins un canal logique. Le procédé selon l'invention comprend :

- une première étape, mise en œuvre par les nœuds, de transmission à un nœud désigné comme nœud décisionnaire, d'informations relatives à une qualité des liens de communication,

- une deuxième étape, mise en œuvre par le nœud décisionnaire, de partitionnement des liens de communication entre des liens de communication utilisant un accès multiple de type NOMA et des liens de communication utilisant un accès multiple de type TDMA, sur un critère de débit calculé à partir des informations relatives à la qualité des liens de communication transmises à la première étape,

- une troisième étape, mise en œuvre par le nœud décisionnaire, de détermination d'un ordonnancement temporel des liens de communication sur le ou les canaux logiques communs, en respectant les types d'accès multiples calculés lors de la deuxième étape,

- une quatrième étape, mise en œuvre par le nœud décisionnaire, de transmission des informations de partitionnement calculées à la deuxième étape et des informations d'ordonnancement temporel calculées à la troisième étape aux nœuds impliqué dans les liens de communication.

Selon différents modes de réalisation, les informations relatives à une qualité des liens de communication sont, pour chaque lien de communication :

- des informations statistiques sur un canal de propagation du lien de communication,

- des informations statistiques sur des canaux de propagation interférents, et

- un niveau de puissance de bruit perçu par le nœud destinataire du lien de communication.

Avantageusement, la deuxième étape de partitionnement des liens de communication comprend la mise en œuvre d'un algorithme itératif comprenant, pour chaque lien de communication, le calcul d'un débit utilisateur en utilisant un mode d'accès multiple de type TDMA, le calcul d'un débit utilisateur en utilisant un mode d'accès multiple de type NOMA compte tenu des modes d'accès multiples utilisés par les autres liens de communications, et le choix du mode d'accès maximisant le débit utilisateur du lien de communications.

Selon un mode de réalisation du procédé, la deuxième étape de partitionnement des liens de communication comprend :

- une étape de calcul d'un débit utilisateur pour chaque lien de communication lorsque tous les liens de communication sont associés à un accès multiple de type TDMA,

- une étape de calcul d'un débit utilisateur pour chaque lien de communication lorsque tous les liens de communication sont associés à un accès multiple de type NOMA,

- une étape de détermination d'un ensemble $T_N$ de liens de communication associés à un accès multiple de type NOMA et d'un ensemble $T_d$ de liens de communication associés à un accès multiple de type TDMA en comparant les débits utilisateur respectifs pour chaque lien de communication,

itérativement, jusqu'à convergence :

- une étape de calcul d'un débit utilisateur pour chaque lien de communication de l'ensemble $T_N$ lorsque seul les liens de communication dudit ensemble $T_N$ utilisent un accès multiple de type NOMA,

- une étape de recherche de liens de communication appartenant à l'ensemble $T_N$ pour lesquels le débit utilisateur pour un accès multiple de type TDMA est supérieur ou égal au débit utilisateur pour un accès multiple de type NOMA, et de transfert de ces liens de communication vers l'ensemble $T_d$ de liens de communications utilisant un accès multiple de type TDMA.

Selon un mode de réalisation particulier, la technique d'accès multiple de type NOMA repose sur l'utilisation de codeurs/décodeurs linéaires, et la deuxième étape de partitionnement des liens de communication entre des liens de communication utilisant un accès multiple de type NOMA et des liens de communication utilisant un accès multiple de type TDMA sur un critère de débit comprend le calcul d'une taille $r$ de codeur/décodeur linéaire et le calcul de matrices de codage/décodage **U et V** adaptées au nombre de liens de communication utilisant un accès multiple de type NOMA.

Selon un mode de réalisation, la troisième étape de partitionnement des liens de communication comprend la définition d'un intervalle temporel long, ou trame, découpé en une pluralité $L$ d'intervalles temporels courts, ou slots, et de répartition des $L$ slots entre les liens de communication afin de maximiser le débit global moyen du réseau de communication ad hoc tout en garantissant un débit minimal pour chaque lien de communication.

Selon un mode de réalisation particulier, $\left\lceil \dfrac{LR_0^u}{R_k^\varphi} \right\rceil$ slots sont attribués exclusivement à chaque lien de communication utilisant un accès multiple de type TDMA, avec $R_0^u$ une contrainte de débit minimum par lien et $R_k^\varphi$ un débit physique associé au lien de communication, $\left\lceil \dfrac{LR_0^u}{\bar{R}_{\text{NOMA,min}}^\varphi} \right\rceil$ slots sont attribués aux liens de communication utilisant un accès multiple de type NOMA, les slots résiduels étant répartis entre les liens de communications utilisant un accès multiple de type NOMA et le lien de communication utilisant un accès multiple de type TDMA présentant le débit physique $R_k^\varphi$ le plus élevé.

Avantageusement, la troisième étape de partitionnement des liens de communication comprend en outre le calcul d'une longueur de trame $L^*$ optimale compte tenu des résultats de la deuxième étape de partitionnement des liens de communication.

Selon un mode de réalisation, le procédé de détermination d'un mode d'accès multiple et d'ordonnancement selon l'invention est mis en œuvre conjointement sur une pluralité de clusters, en regroupant leurs canaux logiques.

L'invention porte également sur un nœud décisionnaire dans un réseau ad hoc comprenant une pluralité de nœuds regroupés dans un ou plusieurs clusters et mettant en œuvre une pluralité de liens de communication sur au moins un canal logique. Le nœud décisionnaire comprend des moyens de calcul configurés pour mettre en œuvre :

- une première étape de réception d'informations relatives à une qualité des liens de communication,

- une deuxième étape de partitionnement des liens de communication entre des liens de communication utilisant un accès multiple de type NOMA et des liens de communication utilisant un accès multiple de type TDMA, sur un critère de débit calculé à partir des informations relatives à la qualité des liens de communication reçues à la première étape,

- une troisième étape de détermination d'un ordonnancement temporel desdits liens de communication sur le ou les canaux logiques, en respectant les types d'accès multiples calculés lors de la deuxième étape,

- une quatrième étape de transmission des informations de partitionnement calculées à la deuxième étape et des informations d'ordonnancement temporel calculées à la troisième étape aux nœuds impliqué dans lesdits liens de communication.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple, et parmi lesquelles :

- la figure 1 représente un réseau ad hoc dans lequel peut être mis en œuvre un procédé de détermination d'un mode d'accès réseau et d'ordonnancement selon l'invention ;

- la figure 2 est un diagramme synoptique d'un procédé de détermination d'un mode d'accès multiple et d'ordonnancement selon un mode de réalisation de l'invention ;

- la figure 3 un diagramme synoptique décrivant une mise en œuvre possible d'un partitionnement entre accès multiple de type TDMA et accès multiple de type NOMA dans un procédé de détermination d'un mode d'accès multiple et d'ordonnancement selon un mode de réalisation de l'invention :

- la figure 4 représente un exemple de partitionnement entre liens de communication utilisant un accès multiple de type TDMA et liens de communication utilisant un accès multiple de type NOMA à l'issue de la deuxième étape d'un procédé de détermination d'un mode d'accès multiple et d'ordonnancement selon un mode de réalisation de l'invention :

- la figure 5 représente schématiquement le problème d'optimisation de l'ordonnancement des liens de communication dans un cas d'application donné à titre d'illustration ;

- la figure 6a est une illustration du partitionnement des liens de communication opéré par le procédé selon l'invention dans le cas de deux clusters disposant chacun d'un canal logique propre considérés séparément ;

- la figure 6b est une illustration du partitionnement des liens de communication opéré par le procédé selon l'invention dans le cas de deux clusters disposant chacun d'un canal logique propre considérés conjointement ;

- la figure 7a donne des débits moyens théoriques obtenus en fonction du nombre de liens de communication dans un cas d'application donné à titre d'illustration de manière à observer l'apport du procédé de détermination d'un mode d'accès multiple et d'ordonnancement selon l'invention ;

- la figure 7b donne des débits minimum théoriques par lien obtenus en fonction du nombre de liens de communication dans un cas d'application donné à titre d'illustration de manière à observer l'apport du procédé de détermination d'un mode d'accès multiple et d'ordonnancement selon l'invention ;

- la figure 8 est une illustration du partitionnement des liens de communication opéré par le procédé selon l'invention dans le cas de deux clusters disposant conjointement d'un unique canal logique ;

- la figure 9a donne des débits moyens théoriques obtenus en fonction du nombre de liens de communication dans un cas d'application donné à titre d'illustration de manière à observer l'apport du procédé de détermination d'un mode d'accès multiple et d'ordonnancement selon l'invention ;

- la figure 9b donne des débits minimum théoriques par lien obtenus en fonction du nombre de liens de communication dans un cas d'application donné à titre d'illustration de manière à observer l'apport du procédé de détermination d'un mode d'accès multiple et d'ordonnancement selon l'invention ;

- la figure 10 est un diagramme synoptique des étapes d'un procédé de détermination d'un mode d'accès multiple et d'ordonnancement selon l'invention mises en œuvre par un nœud décisionnaire.

Des références identiques peuvent être utilisées dans des figures différentes lorsqu'elles désignent des éléments identiques ou comparables.

**Description détaillée** :

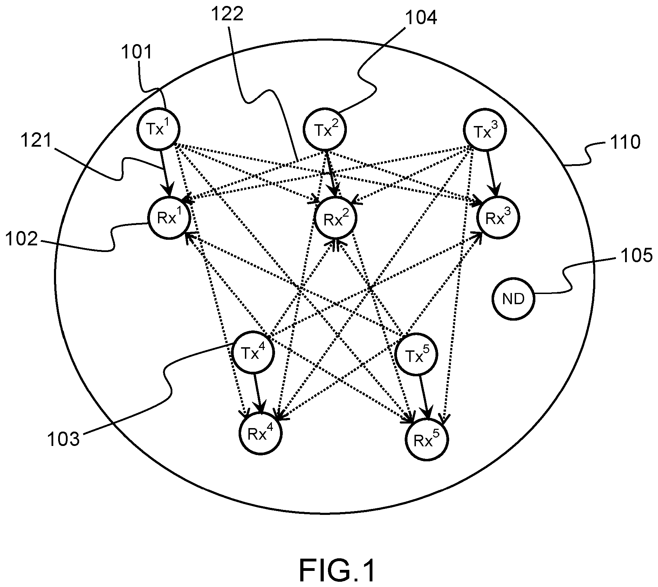

La figure 1 représente un réseau ad hoc dans lequel peut être mis en œuvre un procédé de détermination d'un mode d'accès réseau et d'ordonnancement selon l'invention.

Il comprend une pluralité de nœuds 101, 102, 103, 104, etc. Ces nœuds font partie d'un même sous-groupe de nœuds, ou cluster 110. Le réseau ad hoc peut comprendre un ou plusieurs clusters. Certains nœuds appartenant au même cluster mettent en œuvre des liens de communication représentés à la figure 1 en traits pleins, tel que par exemple le lien de communication 121 entre le nœud 101 et le nœud 102. Dans l'exemple de la figure 1, $N = 5$ liens de communication sont établis entre dix nœuds du cluster 110. On définit un lien $i$ comme étant associé à un couple émetteur-récepteur $Tx^i$ - $Rx^i$. On appelle $s_i$ le symbole que l'émetteur $Tx^i$ souhaite transmettre au récepteur $Rx^i$. Les liens communiquent sur le même canal logique, ce qui peut créer de l'interférence à la réception lorsqu'ils émettent simultanément, comme dans le cas d'un accès multiple de type NOMA. Les signaux interférents pour les récepteurs sont représentés en pointillés sur la figure 1. Par exemple, le signal 122 représente les interférences générées au niveau du récepteur 102 par les émissions de l'émetteur 104.

Le procédé selon l'invention s'applique dans un contexte où les nœuds du réseau peuvent communiquer en utilisant un mode d'accès multiple de type TDMA ou de type NOMA. Le procédé peut être mis en œuvre quel que soit le standard de communications utilisé pour implémenter la transmission TDMA ou NOMA. En effet, le point de fonctionnement, en termes de débit, est susceptible de varier en fonction du standard de communications utilisé, mais cela n'impacte pas le fonctionnement général du procédé de détermination d'un mode d'accès multiple et d'ordonnancement selon l'invention.

A titre d'illustration seulement, la description s'appuie par la suite sur une technique d'accès multiple NOMA très simple, pouvant être mise en œuvre à moindre coût et sans augmentation de la complexité dans la plupart des postes radio existants. Cette technique NOMA est basée sur l'utilisation de codes linéaires, et consiste :

- à l'émission : à multiplier le symbole $s_i$ à transmettre par des coefficients de précodage,
- à la réception : à multiplier les symboles précodés reçus par des coefficients de décodage, avant de les démoduler par un démodulateur conventionnel.

La description considère des transmissions SISO (acronyme anglais pour *Single Input Single Output,* ou mono entrée mono sortie), où les nœuds d'émission et de réception ne disposent que d'une antenne chacun, mais l'invention fonctionne également lorsque l'émetteur et/ou le récepteur dispose(nt) de plusieurs antennes et mettent en œuvre des techniques de traitement d'antennes.

En appliquant la technique d'accès multiple NOMA décrite ci-dessus en SISO à l'ensemble des liens du réseau, et en posant $v_j \in \mathbb{R}^{1 \times r}$ le précodeur linéaire de l'émetteur $Tx^j$ et $r \in \mathbb{N}^*$ la longueur des codeurs, le signal envoyé par chaque émetteur $Tx^j$ est $v_j^T s_j$ , et le signal reçu en $Rx^i$ peut s'écrire comme étant :

$$\mathbf{y}_i = \mathbf{v}_i^T \sqrt{P_i} h_{ii} s_i + \sum_{\substack{j=1 \\ j \neq i}}^{N} \mathbf{v}_j^T \sqrt{P_j} h_{ij} s_j + \mathbf{n}_i$$

où $P_i$ est la puissance émise en $Tx^i$, $h_{ij}$ est une réalisation du canal de propagation d'atténuation aléatoire complexe, qui correspond à la fois aux évanouissements à grande échelle (« large-scale fading ») et ceux à petite échelle (« small-scale fading ») du lien $Tx^j$ vers $Rx^i$, et où $\mathbf{n}_i \in \mathbb{C}^{r \times 1}$ représente le vecteur du bruit de puissance $P_n$.

Après application du décodeur linéaire du récepteur $Rx^i$, noté $u_i \in \mathbb{R}^{1 \times r}$ , le symbole $\hat{s}_i$ estimé en $Rx^i$ peut être

écrit comme étant :

$$\hat{s}_i = \mathbf{u}_i \mathbf{y}_i$$

ce qui se reformule comme :

$$\hat{s}_i = \mathbf{u}_i \mathbf{v}_i^T \sqrt{P_i} h_{ii} s_i + \sum_{\substack{j=1 \\ j \neq i}}^{N} \mathbf{u}_i \mathbf{v}_j^T \sqrt{P_j} h_{ij} s_j + \mathbf{u}_i \mathbf{n}_i.$$

Les puissances $P_i$ émises sont propres aux appareils utilisés comme nœuds dans le réseau, et sont connues.

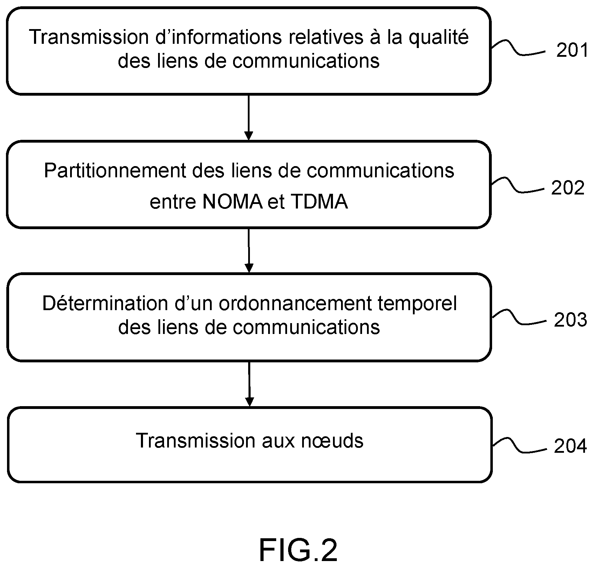

La figure 2 est un diagramme synoptique d'un procédé de détermination d'un mode d'accès multiple et d'ordonnancement selon un mode de réalisation de l'invention.

Il s'applique au cas de liens de communication établis entre des nœuds d'un ou plusieurs clusters appartenant à un réseau ad hoc. Dans les exemples présentés par la suite, les liens de communication sont opérés entre des nœuds appartenant à un même cluster (communications intra-cluster), mais le procédé s'applique de manière identique aux communications réalisées entre des nœuds appartenant à des clusters distincts (communications inter-clusters), dès lors que les nœuds sont configurés pour communiquer sur un ou plusieurs canaux de transmission, ou canaux logiques, communs.

Le procédé de détermination d'un mode d'accès multiple et d'ordonnancement selon l'invention comprend une première étape 201 de transmission, à un nœud désigné comme nœud décisionnaire pour le cluster ou pour une pluralité de clusters, d'informations relatives à la qualité des liens de communication. Cette étape est mise en œuvre par des nœuds de réception des liens de communication, et peut être réalisée de manière continue, ou à chaque itération du procédé.

Cette étape sous-entend l'identification d'un nœud en tant que nœud décisionnaire. Par exemple, lorsque le procédé est appliqué à un seul cluster, comme sur la figure 1, le nœud décisionnaire peut être le nœud chef de cluster (en anglais *cluster head*), déterminé de manière habituelle dans les réseaux de communications ad hoc pour répartir les ressources entre les nœuds d'un cluster. Il peut également s'agir d'un des nœuds impliqués dans les liens de communication, ou d'un nœud autre appartenant au cluster, tel que le nœud 105.

Lorsque le procédé est appliqué à une pluralité de clusters, le nœud décisionnaire peut être un nœud distinct pour chaque cluster lorsque le procédé est mis en œuvre séparément sur les différents clusters, ou être un nœud décisionnaire commun pour la pluralité de clusters lorsqu'ils sont considérés conjointement.

Le nœud décisionnaire peut être choisi sur des considérations de performances ou des considérations géométriques, et/ou être élu par les nœuds du cluster. Le nœud désigné comme nœud décisionnaire peut être amené à évoluer dynamiquement au cours du temps.

Selon un mode de réalisation de l'invention, les informations relatives à la qualité des liens de communication sont des niveaux de puissances reçus par les nœuds de réception Rx$^i$ des liens de communication, incluant le niveau de puissance du nœud d'émission associé Tx$^i$, mais également les niveaux de puissance des signaux reçus des autres émetteurs sur les liens interférents et le niveau de puissance de bruit perçu au niveau des nœuds de réception Rx$^i$.

Avantageusement, afin de diminuer la quantité d'informations de signalisation transmise dans le cluster, les niveaux de puissance transmis peuvent être moyennés et transmis périodiquement ou sur demande du nœud décisionnaire.

Selon un autre mode de réalisation de l'invention, les informations relatives à la qualité des liens de communication sont des estimations instantanées, faites par les nœuds Rx$^i$ de réception des liens de communication, du canal de propagation instantané $h_{ii}$ sur le lien de communication qui les concerne, mais également du canal de propagation instantané sur les liens interférents $h_{ij}$ tel que le lien interférent 122 pour le nœud 102, et du niveau de puissance de bruit au niveau des nœuds de réception Rx$^i$. Ces estimations peuvent par exemple être faites à partir de séquences connues présentes dans la couche physique à des fins d'estimation du canal de propagation.

Selon un mode de réalisation préférentiel de l'invention, les informations relatives à la qualité des liens de communication sont, pour chaque lien de communication, des statistiques associées au canal de propagation d'intérêt $h_{ii}$, et aux canaux de propagation interférents $h_{ij}$, et du niveau de puissance de bruit perçu au niveau du nœud de réception Rx$^i$.

De telles estimations statistiques du canal de propagation sont connues de l'homme du métier. Par exemple, dans le cas d'un canal de Rayleigh plat, il est possible d'estimer les paramètres statistiques du canal en prenant la variance empirique des échantillons d'estimés de $h_{ij}$ et en retirant la variance du bruit. Pour le canal de Rice, une méthode pour estimer les paramètres statistiques :

- à partir d'échantillons bruités du canal de propagation est proposée dans l'article de X. Leturc, P. Ciblat and C. J. Le Martret, "Estimation of the Ricean K-factor from noisy complex channel coefficients" 2016 50th Asilomar Conference on Signals, Systems and Computers, 2016, pp. 1092-1096,

- à partir d'échantillons bruités et sous phénomène de masquage de Nakagami-m est proposée dans X. Leturc et al., "Estimation of the Ricean K Factor in the Presence of Shadowing" in IEEE Communications Letters, vol. 24, no. 1, pp. 108-112, Jan. 2020.

Dans le cas où l'estimation se fait à partir d'échantillons de SINR (sigle anglais pour Signal over Interference plus Noise Ratio, ou rapport signal à interférence plus bruit), une méthode pour estimer les statistiques des canaux dans un canal de Rayleigh plat avec un signal interférent est proposée dans l'article de D. Jia, X. Leturc, M. Assaad and C. L. Martret, "Rayleigh Channel Statistics Estimation Using SINR Samples Under Single Interference" 2022 IEEE 95th Vehicular Technology Conference: (VTC2022-Spring), 2022, pp. 1-5.

Par rapport aux autres modes de réalisation, la transmission des informations relatives à la qualité des liens de communication sous la forme de statistiques associées aux canaux de propagation présente l'avantage de limiter la signalisation transmise sur le réseau, et de ne pas être impacté par les phénomènes ponctuels. En outre, l'utilisation du canal instantanée peut être inefficace lorsque la transmission des informations est trop lente par rapport à la fluctuation temporelle du canal de propagation : les informations reçues par le nœud décisionnaire ne sont alors plus représentatives du canal de propagation actuel, et ne permettent donc pas de prendre des décisions adaptées.

Le procédé de détermination d'un mode d'accès multiple et d'ordonnancement selon l'invention comprend une deuxième étape 202, mise en œuvre par le nœud décisionnaire, de partitionnement des liens de communication entre des liens de communication utilisant un accès multiple de type NOMA et des liens de communication utilisant un accès multiple de type TDMA. Ce partitionnement se fait sur un critère de débit, les débits étant calculés à partir des informations relatives à la qualité des liens de communication transmises au nœud décisionnaire lors de la première étape.

Cette deuxième étape nécessite le calcul des débits utilisateur accessibles en fonction de l'accès multiple choisi et des interférences.

Le débit physique associé à un récepteur Rx$^i$ utilisant un mode d'accès multiple de type TDMA est lié à la définition de la couche physique. Une manière de calculer ce débit au niveau du récepteur est de considérer la capacité de Shannon :

$$R_i^\varphi := W_b \log_2(1 + \mathrm{SNR}_i)$$

où $W_b$ est la bande passante du signal et le SNR en Rx$^i$ est exprimé comme étant :

$$\mathrm{SNR}_i := \frac{P_i |h_{ii}|^2}{P_n}.$$

L'opérateur := est utilisé pour définir une variable mathématique, à la différence de l'opérateur = qui est obtenu après une déduction mathématique.

On définit le débit physique moyen au récepteur Rx$^i$ comme suit :

$$\bar{R}_i^\varphi := \mathbb{E}\big[R_i^\varphi\big],$$

avec $\mathbb{E}$ l'espérance mathématique.

Le débit physique moyen $\bar{R}_i^\varphi$ en TDMA pour le lien de communications i peut donc être calculé à partir du SNR. Le SNR peut être calculé pour chaque lien de communication à partir des niveaux de puissances (puissance de signal et puissance de bruit pour chaque lien de communication) des valeurs des canaux de propagation directs ou des estimations des statistiques des canaux de propagation directs transmis par les nœuds lors de l'étape 201.

D'autres méthodes sont possibles pour calculer ce débit physique moyen $\bar{R}_i^\varphi$ en TDMA, comme par exemple utiliser des formules propres à la forme d'onde considérée, ou en reliant le SNR à un taux d'erreur bits ou paquets théorique ou mesuré.

Lorsque le mode d'accès multiple est de type NOMA, les émetteurs communiquent simultanément, ce qui induit de l'interférence. Le débit physique au niveau du récepteur Rx$^i$ peut alors s'écrire comme :

$$R^{\varphi}_{\text{NOMA},i}(\mathbf{U}, \mathbf{V}) := W_b \log_2\big(1 + \text{SINR}_i(\mathbf{U}, \mathbf{V})\big)$$

où le SINR au nœud de réception Rx$^i$ dépend de la méthode NOMA utilisée, et $\mathbf{U} := \begin{pmatrix} \mathbf{u}_1 \\ \vdots \\ \mathbf{u}_N \end{pmatrix}$, $\mathbf{V} := \begin{pmatrix} \mathbf{v}_1 \\ \vdots \\ \mathbf{v}_N \end{pmatrix}$ sont

respectivement les matrices contenant l'ensemble des décodeurs et des précodeurs obtenues en considérant que tous les liens du réseau utilisent une technique d'accès NOMA.

Dans le cas donné ici à titre d'illustration, avec des nœuds SISO utilisant une technique d'accès multiple de type NOMA avec des précodeurs linéaires $\mathbf{v}_j \in \mathbb{R}^{1 \times r}$ de taille $r \le N$ pour l'émetteur Tx$^j$, et des décodeurs linéaires $\mathbf{u}_i \in \mathbb{R}^{1 \times r}$ pour le récepteur Rx$^i$, le SINR en Rx$^i$ s'exprime comme suit :

$$\text{SINR}_i(\mathbf{U}, \mathbf{V}) = \frac{P_i |h_{ii}|^2 \big(\mathbf{u}_i \mathbf{v}_i^T\big)^2}{P_n + \sum_{\substack{j=1 \\ j \ne i}}^{N} P_j \big|h_{ij}\big|^2 \big(\mathbf{u}_i \mathbf{v}_j^T\big)^2}.$$

Ce SINR peut être calculé à partir des estimations instantanées ou des modèles statistiques des canaux de propagation directs et interférents transmis par les nœuds lors de l'étape 201. Il peut également être calculé en utilisant les niveaux de puissance émis par l'émetteur d'intérêt et les émetteurs interférents lors de l'étape 201, en considérant que la puissance reçue pour un lien (direct ou interférent) vaut $P_i|h_{ii}|^2$ ou $P_j|h_{ij}|^2$. La définition du SINR est propre au schéma NOMA considéré. Par exemple, dans le cas d'un NOMA en puissance où les interférences sont traitées par un algorithme de SIC, la formule du SNR ne comprend pas les vecteurs **u** et **v**.

On définit le débit physique moyen au niveau du récepteur Rx$^i$ comme suit :

$$\bar{R}^{\varphi}_{\text{NOMA},i}(\mathbf{U}, \mathbf{V}) := \mathbb{E}\big[R^{\varphi}_{\text{NOMA},i}(\mathbf{U}, \mathbf{V})\big]$$

Le débit physique pour un lien de communication utilisant un mode d'accès de type NOMA peut donc être calculé à partir des informations reçues lors de l'étape 201.

Le débit utilisateur est le débit lié à la couche protocolaire, et est égal au débit physique multiplié par la proportion de temps allouée au lien correspondant pendant une transmission. Pour le définir, on considère une trame contenant L slots que l'on nommera dans la suite « trame de longueur $L$ ». Le terme « slot » est défini comme étant un sous intervalle de temps de la trame de longueur $L$, et constitue la plus petite unité de temps qu'il est possible d'allouer pour des communications sur un lien donné. Chaque trame comprend $L$ slots.

Dans le cas d'un mode d'accès multiple de type TDMA, on définit ensuite $n_i$ comme le nombre de transmissions pour chaque lien $i \in \{1, ..., N\}$ du réseau, où la durée élémentaire d'une transmission est d'un slot. Nous supposons que $L \ge N$ afin que chaque lien puisse se voir attribuer au moins une transmission. En TDMA, le débit utilisateur au récepteur Rx$^i$ sur une trame de longueur $L$ peut donc s'écrire comme suit :

$$\bar{R}^u_{\text{TDMA},i} := \frac{n_i}{L} \bar{R}^{\varphi}_i.$$

En outre, nous considérons, dans le cadre d'un mode d'accès TDMA, un schéma utilisant un algorithme de « round-robin », dont l'objectif est d'allouer le même nombre de slots à chaque lien. Pour ce faire, les émetteurs communiquent à chaque slot les uns après les autres, c'est-à-dire Tx$^1$, puis Tx$^2$, ... Dans la suite, on appelle cette méthode « round-robin TDMA ». D'autres méthodes pourraient être envisagées de manière similaire.

Lorsque l'on applique le round-robin TDMA sur une trame longue, c'est-à-dire lorsque $L$ est grand par rapport à $N$, on peut faire l'approximation que le nombre de slots alloué est le même pour chaque lien, ce qui s'écrit comme étant :

$$n_1 =, ..., = n_N = \frac{L}{N}.$$

Par conséquent, le débit utilisateur moyen au récepteur Rx$^i$ en faisant du round-robin TDMA peut s'écrire comme étant :

$$\bar{R}^u_{\text{RRTDMA},i} := \frac{\bar{R}^\varphi_i}{N}.$$

Dans le cas d'un accès multiple de type NOMA, on définit $n_{\text{NOMA}}$ comme étant égal au nombre de fois où un accès multiple de type NOMA est appliqué sur une trame de longueur $L$. En NOMA, le débit utilisateur au récepteur Rx$^i$ sur une trame de longueur $L$ peut donc s'écrire comme suit :

$$\bar{R}^u_{\text{NOMA},i}(\mathbf{U}, \mathbf{V}) := \frac{n_{\text{NOMA}}}{L} \bar{R}^\varphi_{\text{NOMA},i}(\mathbf{U}, \mathbf{V}).$$

De même que pour le mode d'accès multiple de type TDMA, l'utilisation d'un accès multiple de type NOMA pour les $N$ liens de communications peut utiliser l'approximation suivante pour des trames longues, c'est-à-dire $L$ grand par rapport à $r$, r étant la longueur des codeurs linéaires du NOMA lorsque le mode d'accès NOMA utilise des codes linéaires :

$$n_{\text{NOMA}} \approx \frac{L}{r},$$

Ce qui conduit à l'expression du débit utilisateur en Rx$^i$ comme suit :

$$\bar{R}^u_{\text{NOMA},i}(\mathbf{U}, \mathbf{V}) \approx \frac{\bar{R}^\varphi_{\text{NOMA},i}(\mathbf{U}, \mathbf{V})}{r}.$$

Cette formule est liée au schéma NOMA considéré. Par exemple, un schéma NOMA en domaine de puissance correspond à $r = 1$.

Le partitionnement des liens en deux groupes de liens, ceux utilisant un accès multiple de type NOMA et ceux utilisant un accès multiple de type TDMA, se fait ensuite itérativement sur un critère de débit, de manière à privilégier la solution permettant d'obtenir les débits les plus élevés pour chaque lien de communication. Pour ce faire, nous définissons $T_N$ comme l'ensemble des liens ayant un débit plus élevé lorsqu'on utilise un accès multiple de type NOMA que lorsqu'on utilise un accès multiple de type TDMA. Puis, nous définissons $T_d$ comme l'ensemble des liens ayant un débit plus élevé lorsqu'on utilise un accès multiple de type TDMA que lorsqu'on utilise un accès multiple de type NOMA. Les ensembles $T_N$ et $T_d$ sont calculés de sorte qu'ils forment une partition de l'ensemble de tous les liens $\{1, ..., N\}$, c'est-à-dire que $T_N \cup T_d = \{1,...,N\}$ et $T_N \cap T_d = \emptyset$.

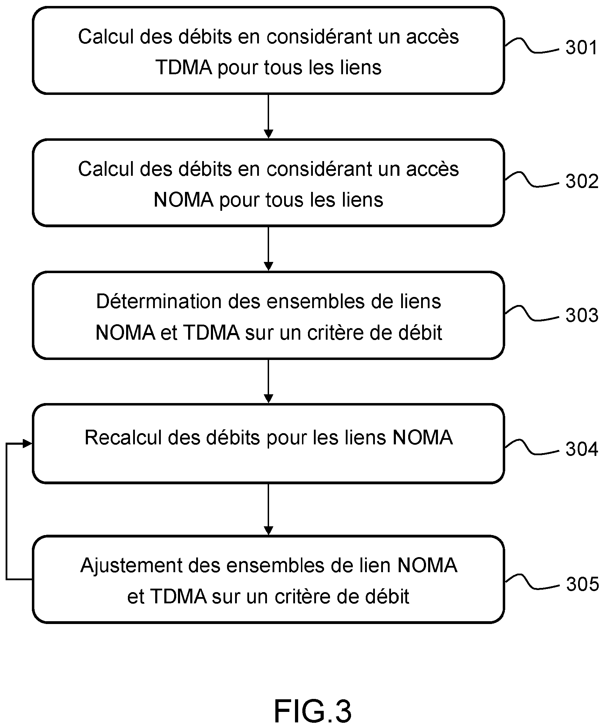

La figure 3 est un diagramme synoptique décrivant une mise en œuvre possible de cette étape 202 de partitionnement des liens de communications dans les ensembles $T_N$ et $T_d$. Elle comprend trois étapes :

- une première étape 301 de calcul des débits utilisateurs obtenus en appliquant un critère de « round-robin » pour un accès TDMA à l'ensemble des liens de communication, en calculant les débits $\bar{R}^u_{\text{RRTDMA},i}$ pour tous les liens de communication $i$ ;

- une deuxième étape 302 de calcul des débits utilisateurs obtenus en appliquant un accès multiple de type NOMA à l'ensemble des liens de communication sur une durée élémentaire pour une transmission NOMA, correspondant à r slots. Ces débits dépendent de la technique d'accès NOMA utilisée et du nombre de liens émettant simultanément. Dans le cas donné à titre d'illustration, ils sont obtenus en considérant également les matrices $\mathbf{U}(r)$, $\mathbf{V}(r)$ et la longueur $r$, en calculant les débits $\bar{R}^u_{\text{NOMA},i}(\mathbf{U}(r), \mathbf{V}(r))$ pour tous les liens de communication $i$ ;

- une troisième étape 303 de détermination des ensembles de liens $T_N$ et $T_d$ définis comme étant les ensembles de nœuds assignés respectivement à un accès multiple de type NOMA et de type TDMA, sur un critère de débit, avec :

$$T_N := \{i \in \{1, ..., N\} | \bar{R}^u_{\text{NOMA},i} > \bar{R}^u_{\text{RRTDMA},i}\}$$

$$T_d := \{i \in \{1, ..., N\} | \bar{R}^u_{\text{NOMA},i} \le \bar{R}^u_{\text{RRTDMA},i}\}$$

où $\bar{R}^u_{\text{NOMA},i}$ est une simplification de la notation $\bar{R}^u_{\text{NOMA},i}(\mathbf{U}(r), \mathbf{V}(r))$ ;

- une quatrième étape 304 de calcul des débits utilisateurs obtenus en appliquant un accès NOMA aux liens de communication de l'ensemble $T_N$, c'est-à-dire en recalculant $\bar{R}^u_{\text{NOMA},i}(\mathbf{U}(r), \mathbf{V}(r))$ pour tous les $i \in T_N$. Le débit obtenu est alors noté $\bar{R}^{u,T_N}_{\text{NOMA},i}$ ;

- une cinquième étape 305 de détermination des liens de communication appartenant à l'ensemble $T_N$ pour lesquels $\bar{R}^{u,T_N}_{\text{NOMA},i} \leq \bar{R}^u_{\text{RRTDMA},i}$ , et de transfert desdits liens de communication de l'ensemble $T_N$ vers l'ensemble $T_d$.

La quatrième étape 304 et la cinquième étape 305 du procédé sont itérées jusqu'à ce que les ensembles $T_N$ et $T_d$ convergent. On peut démontrer que cet algorithme converge puisque le cas limite se ramène au cas où l'ensemble $T_N$ ne possède qu'un unique lien, et l'ensemble $T_d$ en possède $N$ - 1. Cette situation revient à utiliser un accès multiple de type TDMA sur l'ensemble des liens du réseau.

La mise en œuvre présentée à la figure 3 présente l'avantage de ce que les débits utilisés pour déterminer la distribution des accès multiples des liens de communication sont ajustés au plus juste par rapport au débit accessible en NOMA.

Avantageusement, dans le cas où le schéma NOMA considéré est un schéma utilisant des précodeurs/décodeurs linéaires, les vecteurs et tailles de ces précodeurs/décodeurs linéaires peuvent être optimisés par rapport au nombre $N$ de liens de communication et aux débits utilisateurs lors de la deuxième étape 302 et de la quatrième étape 304 du procédé. Dans ce cas, à chacune de ces étapes, la longueur r des précodeurs/décodeurs linéaires et les vecteurs $\mathbf{U}(r)$ et $\mathbf{V}(r)$ peuvent être recalculés, pour obtenir les valeurs optimales $r^*$, $\mathbf{U}^*$ et $\mathbf{V}^*$ avant de calculer les débits NOMA $\bar{R}^u_{\text{NOMA},i}(\mathbf{U}^*(r^*), \mathbf{V}^*(r^*))$ utilisés lors de la troisième étape 303 et de la cinquième étape 305.

En effet, dans le cas d'accès multiples de type NOMA où la technique d'accès non orthogonal est basée sur l'utilisation de codeurs linéaires, la taille r des codeurs est comprise entre 2 et $N$ - 1 slots, (le cas $r = N$ revenant à faire du TDMA).

Le problème d'optimisation conjointe des codeurs linéaires et de leur taille peut s'écrire en utilisant l'approximation de $\bar{R}^u_{\text{NOMA},i}(\mathbf{U}, \mathbf{V})$ , décrite ci-dessus, comme suit :

$$\mathbf{U}^*, \mathbf{V}^*, r^* = \underset{\mathbf{U}, \mathbf{V} \in \mathbb{R}^{N \times r}, r \in \{2, ..., N-1\}}{\operatorname{argmax}} \sum_{i=1}^{N} \bar{R}^{\varphi}_{\text{NOMA},i}(\mathbf{U}, \mathbf{V}) ,$$

où la fonction argmax() donne l'indice du maximum.

Une méthode possible pour résoudre ce problème est de le traiter séquentiellement pour une valeur r fixée, en résolvant pour toute valeur $r = 2, ..., N$ - 1 le problème suivant :

$$\mathbf{U}^*(r), \mathbf{V}^*(r) = \underset{\mathbf{U}, \mathbf{V} \in \mathbb{R}^{N \times r}}{\operatorname{argmax}} \sum_{i=1}^{N} \bar{R}^{\varphi}_{\text{NOMA},i}(\mathbf{U}, \mathbf{V})$$

où $\mathbf{U}^*(r)$, $\mathbf{V}^*(r)$ sont les codeurs linéaires optimaux parmi les codeurs linéaires de taille r.

On calcule alors le débit utilisateur moyen total du réseau avec les codeurs optimaux $\mathbf{U}^*$ et $\mathbf{V}^*$ pour cette valeur r donnée, ce qui s'exprime comme :

$$\bar{R}^{sum}_{\text{NOMA}}(r) = \sum_{i=1}^{N} \bar{R}^{\varphi}_{\text{NOMA},i}(\mathbf{U}^*(r), \mathbf{V}^*(r))$$

On choisit enfin la valeur $r^*$ qui maximise le débit total, autrement dit :

$$r^* = \underset{r=2,\dots,N-1}{\mathrm{argmax}}\ \bar{R}_{\mathrm{NOMA}}^{sum}(r)$$

Les codeurs linéaires utilisés sont ceux ayant été calculés pour $r = r^*$, soit $\mathbf{U}^*(r^*)$, $\mathbf{V}^*(r^*)$.

A noter que pour résoudre le problème du calcul de $\mathbf{U}^*(r)$, $\mathbf{V}^*(r)$ pour un r donné, il est également possible d'utiliser des techniques d'optimisation non-convexe comme l'optimisation alternée, la programmation géométrique ou l'optimisation riemannienne. Le terme $\bar{R}_{\mathrm{NOMA},i}^{\varphi}$ ne dépend pas du canal instantané et peut être calculé par exemple analytiquement.

Une méthode possible, en considérant un canal de Rayleigh, consiste à utiliser l'approximation suivante :

$$\bar{R}_{\mathrm{NOMA},i}^{\varphi} \approx \log_2\big(1 + \mathrm{SINR}_i^{hard}\big)$$

où $\mathrm{SINR}_i^{hard}$ est une approximation du $\mathrm{SINR}_i$ s'exprimant comme étant :

$$\mathrm{SINR}_i^{hard} = \frac{P_i\gamma_{ii}(\mathbf{u}_i\mathbf{v}_i^T)^2}{P_n + \sum_{\substack{j=1 \\ j\neq i}}^{N} P_j\gamma_{ij}\big(\mathbf{u}_i\mathbf{v}_j^T\big)^2}$$

La résolution peut se faire en combinant une méthode d'optimisation alternée et de descente de gradient pour une longueur des codeurs donnée r, telle que :

$$\mathbf{U}^*(r), \mathbf{V}^*(r) = \underset{\mathbf{U},\mathbf{V}\in\mathbb{R}^{N\times r}}{\mathrm{argmax}} \sum_{i=1}^{N} \log_2\Big(1 + \mathrm{SINR}_i^{hard}\mathbf{U}(r), \mathbf{V}(r)\Big).$$

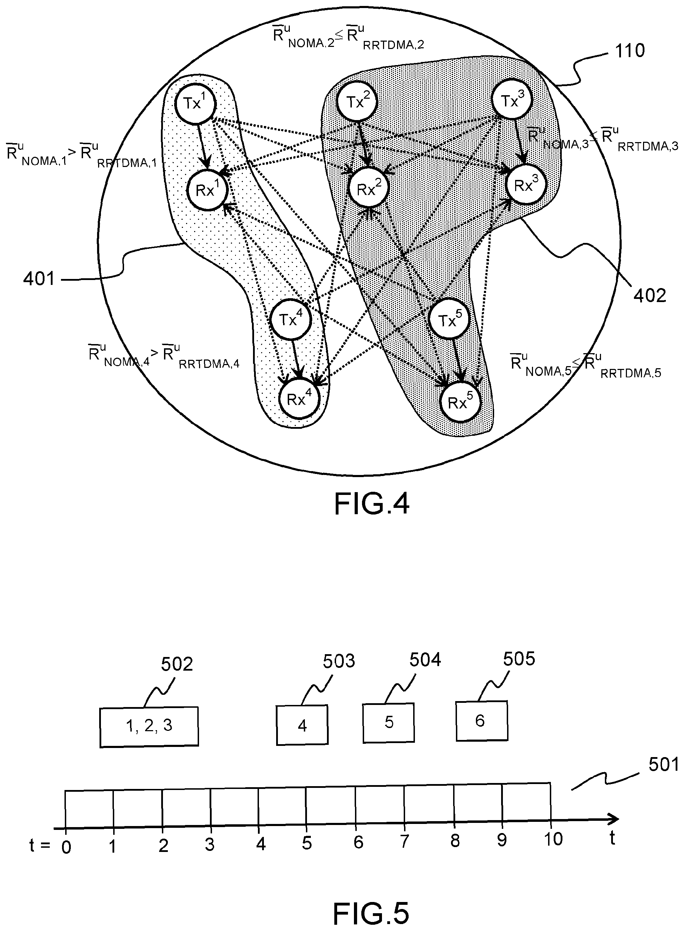

La figure 4 représente un exemple de partitionnement entre liens de communication utilisant un accès multiple de type TDMA et liens de communication utilisant un accès multiple de type NOMA à l'issue de la deuxième étape (202) d'un procédé de détermination d'un mode d'accès multiple et d'ordonnancement selon un mode de réalisation de l'invention. On y voit que certains liens de communication, appartenant à l'ensemble $T_d$, sont associés au mode d'accès multiple TDMA 402, tandis que les autres liens de communication, appartenant à l'ensemble $T_N$, sont associés au mode d'accès multiple NOMA 401.

Le procédé selon l'invention comprend une troisième étape 203 de détermination d'un ordonnancement temporel des liens de communication, en respectant les types d'accès multiples calculés lors de la deuxième étape 202. Cette étape est mise en œuvre par le nœud décisionnaire. Elle consiste à trouver les meilleurs créneaux de temps à allouer aux liens de communication sur les canaux logiques qui leur sont attribués.

En considérant toujours une trame de longueur $L$, l'objectif est d'optimiser le nombre de slots alloués à chaque lien compte tenu de la longueur de la trame L, afin de maximiser le débit global moyen du réseau tout en garantissant un débit minimal pour chaque lien du réseau. Cette tâche peut être mise en œuvre de deux façons :

- en considérant que la trame a une longueur $L$ donnée et fixe ;

- en optimisant conjointement la longueur $L$ de la trame et le débit global moyen du réseau.

La figure 5 représente schématiquement le problème d'optimisation de l'ordonnancement des liens de communication dans le cas d'une trame 501 de longueur $L$ = 10 slots, avec $N$ = 6 liens de communication. Les liens de communication 1, 2 et 3 (502) utilisent un mode d'accès multiple de type NOMA, une réalisation NOMA ayant ici une durée de $r$ = 2 slots. Une ou plusieurs paires de slots doivent alors être réservées dans la trame pour les émissions simultanées faites par ces trois nœuds de communications. Les liens de communication 4 (503), 5 (504) et 6 (505) utilisent un mode d'accès multiple de type TDMA. Au moins un slot doit être réservé dans la trame pour chacun de ces liens de communications. On a donc $T_N$ = {1, 2, 3} et $T_d$ = {4, 5, 6}. Le problème consiste à assigner au mieux les slots en fonction d'un débit minimum par lien, et ce de manière à optimiser le débit global du réseau. Les définitions de trames sont valables jusqu'à ce qu'une nouvelle itération du procédé modifie les allocations de slots.

Dans le cas d'une trame de longueur $L$ fixe, les paramètres $n_k$ pour $k \in T_d$ et $n_{\mathrm{NOMA}}$ doivent être optimisés, $n_k$

correspondant au nombre de transmissions pour le lien de communication $k \in T_d$ dans la trame, et $n_{\text{NOMA}}$ correspondant au nombre de fois où un accès NOMA est réservé dans la trame. Puisque $L$ correspond au nombre total de slots à allouer, les paramètres $n_k$ et $n_{\text{NOMA}}$ sont contraints par l'égalité suivante :

$$\sum_{k \in T_d} n_k + n_{\text{NOMA}} r = L$$

où r est la durée d'une réalisation du NOMA. De plus, le débit moyen global $\bar{R}_{\text{sum}}^{hy}$ du réseau obtenu suite à la deuxième étape 202 de mise en œuvre du procédé selon l'invention peut être écrit comme suit :

$$\bar{R}_{\text{sum}}^{hy} := \sum_{j \in T_N} \bar{R}_{\text{NOMA},j}^{u,T_N} + \sum_{k \in T_d} \bar{R}_{\text{TDMA},k}^{u}$$

Puisque la solution technique vise à maximiser le débit global du réseau en assurant un débit minimal par lien, le problème (P1) d'optimisation de l'ordonnancement peut être formulé comme étant :

$$(n_k^*)_{k \in T_d}, n_{\text{NOMA}}^* = \underset{(n_k)_{k \in T_d}, n_{\text{NOMA}} \in \mathbb{N}^*}{\text{argmax}} \bar{R}_{\text{sum}}^{hy}$$

sous contraintes que :

$$\begin{cases} \bar{R}_{\text{TDMA},k}^{u} \geq R_0^u, \forall k \in T_d \\ \bar{R}_{\text{NOMA},\min}^{u,T_N} \geq R_0^u \\ \sum_{k \in T_d} n_k + n_{\text{NOMA}} r = L, \end{cases}$$

où R# est la contrainte de débit minimal par lien, paramétrable selon les besoins des utilisateurs et la faisabilité du problème, $\bar{R}_{\text{NOMA},\min}^{u,T_N} := \frac{n_{\text{NOMA}}}{L} \bar{R}_{\text{NOMA},\min}^{\varphi}$ et $\bar{R}_{\text{NOMA},\min}^{\varphi} := \min_{j \in T_N} \bar{R}_{\text{NOMA},j}^{\varphi}$ .

Ce problème peut par exemple être résolu grâce à une approche analytique qui permet :

- de tester la faisabilité de manière analytique, c'est-à-dire sans utiliser aucune procédure itérative,
- de trouver la solution optimale de (P1) de manière analytique, c'est-à-dire sans utiliser aucune procédure itérative, ce qui est nettement moins complexe que les heuristiques proposées dans l'état de l'art.

Pour tester la faisabilité du problème d'optimisation, on peut démontrer que (P1) est faisable si et seulement si on a la condition suivante :

$$\sum_{k \in T_d} n_k^{\min} + n_{\text{NOMA}}^{\min} r \leq L$$

où $n_k^{\min} := \left\lceil \frac{L R_0^u}{R_k^{\varphi}} \right\rceil, \forall k \in T_d$, et $n_{\text{NOMA}}^{\min} := \left\lceil \frac{L R_0^u}{\bar{R}_{\text{NOMA},\min}^{\varphi}} \right\rceil$ sont respectivement le nombre de transmissions minimum du lien $k$ et des liens dans $T_N$ tel que (P1) est faisable, l'opérateur $\lceil \ \rceil$ désignant la partie entière supérieure.

Ce résultat se démontre en montrant que le nombre minimal de transmissions de chaque lien de communication ( $n_k^{\min}$ et $n_{\text{NOMA}}^{\min}$ ) nécessaire pour respecter la contrainte de débit ne doit pas dépasser le nombre de slots total $L$. Par ailleurs, il est intéressant de noter que la faisabilité de (P1) peut être vérifiée uniquement grâce à la condition décrite ci-dessus, plutôt que par une procédure itérative.

Pour exprimer la solution optimale de (P1), on définit les variables suivantes : $\bar{R}^{\varphi}_{\text{sum},T_N} := \sum_{j \in T_N} \bar{R}^{\varphi}_{\text{NOMA},j}$

qui correspond au débit physique total des liens de l'ensemble $T_N$, $k_{\max} := \text{argmax}_{k \in T_d} \bar{R}^{\varphi}_k$ qui correspond au lien avec le plus haut débit physique dans $T_d$, $n_{k_{\max}}$ le nombre de slots associés au lien $k_{\max}$ et

$L_{res} := L - \sum_{k \in T_d} n_k^{\min} - n_{\text{NOMA}}^{\min} r$ qui correspond au nombre de slots restant après avoir alloué des slots aux liens de communication pour garantir la faisabilité de (P1), c'est-à-dire pour respecter les contraintes de (P1).

La solution optimale de (P1), qui s'affranchit des règles de round-robin TDMA, peut être exprimée comme suit :

si $\bar{R}^{\varphi}_{\text{sum},T_N} \leq r\bar{R}^{\varphi}_{k_{\max}}$, la solution optimale de (P1) est :

$$\begin{cases} n_k^* = n_k^{\min}, \forall k \in T_d \backslash \{k_{max}\} \\ n_{\text{NOMA}}^* = n_{\text{NOMA}}^{\min} \\ n_{k_{\max}}^* = n_{k_{\max}}^{\min} + L_{res} \end{cases}$$

si $\bar{R}^{\varphi}_{\text{sum},T_N} > r\bar{R}^{\varphi}_{k_{\max}}$, la solution optimale de (P1) est :

$$\begin{cases} n_k^* = n_k^{\min}, \forall k \in T_d \backslash \{k_{max}\} \\ n_{\text{NOMA}}^* = n_{\text{NOMA}}^{\min} + \left\lfloor \dfrac{L_{res}}{r} \right\rfloor \\ n_{k_{\max}}^* = n_{k_{\max}}^{\min} + L_{res} - \left\lfloor \dfrac{L_{res}}{r} \right\rfloor r \end{cases}$$

$T_d \backslash \{k_{max}\}$ désignant l'ensemble $T_d$ privé de $k_{max}$, et l'opérateur ⌊ ⌋ désignant la partie entière inférieure.

Ce résultat se démontre en remarquant que l'allocation optimale des transmissions $(n_k)_{k \in T_d}$ et $n_{\text{NOMA}}$ s'effectue dans un premier temps en allouant les slots nécessaires pour garantir la faisabilité de (P1), c'est à dire en allouant $n_k^{\min}$ slots aux liens de communication $k \in T_d$ et $n_{\text{NOMA}}^{\min} r$ slots aux liens de communication de l'ensemble $T_N$. Dans un deuxième temps, les $L_{res}$ slots restants sont soit alloués aux liens de l'ensemble $T_d$, soit aux liens de l'ensemble $T_N$, en fonction de la condition $\bar{R}^{\varphi}_{\text{sum},T_N} \lessgtr r\bar{R}^{\varphi}_{k_{\max}}$, qui indique le groupe de liens ($T_N$ ou $T_d$) donnant le plus haut débit sur r slots. Si $\bar{R}^{\varphi}_{\text{sum},T_N} \leq r\bar{R}^{\varphi}_{k_{\max}}$, les liens de $T_d$ fournissent un plus haut débit que ceux de $T_N$ et les $L_{res}$ slots restants sont alloués à $k_{max}$. Si $\bar{R}^{\varphi}_{\text{sum},T_N} > r\bar{R}^{\varphi}_{k_{\max}}$, les liens de $T_N$ fournissent un plus haut débit que ceux de $T_d$ et les $L_{res}$ slots restants sont alloués pour les accès multiples de type NOMA, puis s'il reste des slots (ce nombre est nécessairement inférieur à r), ils sont alloués au lien $k_{max}$.

Une autre solution à ce problème, compatible avec l'algorithme de round-robin, consiste à :

- déterminer la valeur de $n_k^{min}$ maximale parmi les nœuds de l'ensemble de nœuds appartenant à l'ensemble $T_d$ ($k \in T_d$), soit $n_{RR}^{min} := \max_{k \in T_d} n_k^{min}$, puis allouer successivement $n_{RR}^{min}$ slots à chaque lien de l'ensemble $T_d$.

- vérifier la faisabilité de la solution, c'est-à-dire vérifier que l'on ait assez slots à allouer en round-robin tout en assurant un débit minimal, soit la condition suivante : $Mn_{RR}^{min} + n_{\text{NOMA}}^{\min} r \leq L$, où M est le nombre de liens dans l'ensemble $T_d$,

- si la faisabilité est assurée, allouer les slots restants aux liens NOMA, soit $n^*_{\text{NOMA}} = n^{\min}_{\text{NOMA}} + \left\lceil \frac{L_{res}}{r} \right\rceil$ avec

$L_{res} := L - M n^{min}_{RR} - n^{\min}_{\text{NOMA}} r$ , relacher les contraintes, ou s'écarter légèrement du principe de round-robin en allouant un nombre de slots différent et inférieur à $n^{min}_{RR}$ à certains liens de l'ensemble $T_d$.

Une autre solution consiste à optimiser simultanément l'ordonnancement des nœuds et la longueur $L$ de la trame. En effet, comme la longueur de trame $L$ a une influence sur le débit moyen global du réseau, ce paramètre peut être optimisé pour améliorer le débit global. De plus, minimiser la longueur de trame L permet de diminuer la latence dans le réseau.

Comme précédemment, une approche analytique peut être utilisée pour déterminer une condition de faisabilité du problème et la solution optimale. Le problème (P2) d'optimisation correspondant peut-être formulé comme suit :

$$(n^*_k)_{k \in T_d}, n^*_{\text{NOMA}}, L^* = \underset{(n_k)_{k \in T_d}, n_{\text{NOMA}}, L \in \mathbb{N}^*}{\text{argmax}} \bar{R}^{hy}_{\text{sum}}$$

sous contraintes que :

$$\begin{cases} \bar{R}^u_{\text{TDMA},k} \geq R^u_0, \forall k \in T_d \\ \bar{R}^{u,T_N}_{\text{NOMA,min}} \geq R^u_0 \\ \sum_{k \in T_d} n_k + n_{\text{NOMA}} r = L. \end{cases}$$

Pour tester la faisabilité de (P2), il est possible de démontrer que (P2) est faisable si et seulement si l'une des conditions suivantes est vérifiée :

- 

$$R^u_0 \left( \sum_{k \in T_d} \frac{1}{\bar{R}^\varphi_k} + \frac{r}{\bar{R}^\varphi_{\text{NOMA,min}}} \right) < 1$$

- $R^u_0 \left( \sum_{k \in T_d} \frac{1}{\bar{R}^\varphi_k} + \frac{r}{\bar{R}^\varphi_{\text{NOMA,min}}} \right) = 1$ et $\left( \bar{R}^\varphi_k \right)_{k \in T_d}$ , $\bar{R}^\varphi_{\text{NOMA,min}}$ sont des nombres rationnels.

La rationalité des débits moyens est la plupart du temps respectée puisque l'on considère des communications numériques.

Pour exprimer la solution optimale de (P2), on définit les opérateurs suivants : le PGCD (plus grand commun diviseur) et le PPCM (plus petit commun multiple). Ces deux opérateurs peuvent être calculés avec l'algorithme d'Euclide. De plus, dans la suite, l'opération PPCM($(a_n)_{n \in M}$, $b$) correspond au PPCM de tous les termes de $a_n$, $n \in M$ et de $b$.

La solution optimale de (P2) peut être obtenue avec la procédure suivante :

- tester la faisabilité de (P2) en utilisant la condition de faisabilité définie ci-dessus. Cette étape consiste à analyser si les conditions posées sont réalisables ou non pour garantir un débit minimal par lien, c'est-à-dire si le nombre de slots à allouer dans la trame de longueur L est suffisant pour que chaque lien ait un débit utilisateur supérieur au débit utilisateur minimal $R^u_0$ imposé . Si ce n'est pas le cas, la contrainte de débit minimal doit être réduite, ou la puissance d'émission des appareils augmentée ;

- calculer $\bar{R}^\varphi_{\text{sum},T_N} := \sum_{j \in T_i} \bar{R}^\varphi_{\text{NOMA},j}$ et $k_{\max} := \text{argmax}_{k \in T_d} \bar{R}^\varphi_k$ , puis comparer $\bar{R}^\varphi_{\text{sum},T_N}$ et

$$r\overline{R}^{\varphi}_{k_{\max}} \text{ ,}$$

- si $\overline{R}^{\varphi}_{\mathrm{sum},T_N} \leq r\overline{R}^{\varphi}_{k_{\max}}$ ,

  ○ calculer les valeurs $(p_k, q_k) \in (\mathbb{N}^*)^2$ et $(p_{\mathrm{NOMA}}, q_{\mathrm{NOMA}}) \in (\mathbb{N}^*)^2$ telles que :

$$\forall k \in T_d \setminus \mathcal{K}_{\max}, \frac{p_k}{q_k} = \frac{R_0^u}{\overline{R}_k^{\varphi}}$$

$$\frac{p_{\mathrm{NOMA}}}{q_{\mathrm{NOMA}}} = \frac{R_0^u}{\overline{R}_{\mathrm{NOMA,min}}^{\varphi}}$$

  où $\mathcal{K}_{\max} = \{k \mid \overline{R}_k^{\varphi} = \overline{R}_{k_{\max}}^{\varphi}\}$ , PGCD($p_{\mathrm{NOMA}}$, $q_{\mathrm{NOMA}}$) = 1 et $\forall k \in T_d \setminus \mathcal{K}_{\max}$, PGCD($p_k$, $q_k$) = 1 ;

  ○ calculer $L^*$ = PPCM$\big((q_k)_{k \in T_d \setminus \mathcal{K}_{max}}, q_{\mathrm{NOMA}}\big)$.

- si $\overline{R}^{\varphi}_{\mathrm{sum},T_N} > r\overline{R}^{\varphi}_{k_{\max}}$ ,

  ○ calculer les valeurs $(p_k, q_k) \in (\mathbb{N}^*)^2$ et $(p_0, q_0) \in (\mathbb{N}^*)^2$ telles que :

$$\forall k \in T_d, \frac{p_k}{q_k} = \frac{R_0^u}{\overline{R}_k^{\varphi}}$$

$$\frac{p_0}{q_0} = \frac{1}{r}\left(1 - \sum_{k \in T_d} \frac{R_0^u}{\overline{R}_k^{\varphi}}\right)$$

  où PGCD($p_0$, $q_0$) = 1 et $\forall k \in T_d$, PGCD($p_k$, $q_k$) = 1 ;

- calculer $L^*$ = PPCM$\big((q_k)_{k \in T_d}, q_0\big)$ ;

- calculer les paramètres $(n_k^*)_{k \in T_d}$ et $n_{\mathrm{NOMA}}^*$ en résolvant le problème (P1) sur une longueur de trame $L^*$.

Enfin, le procédé de détermination d'un mode d'accès multiple et d'ordonnancement selon l'invention comprend une quatrième étape (204), réalisée par le nœud décisionnaire, de transmission des informations concernant les modes d'accès multiple à utiliser pour les liens de communication et leur ordonnancement temporel, au minimum aux nœuds impliqués dans les liens de communication.

Le procédé de détermination d'un mode d'accès multiple et d'ordonnancement selon l'invention se divise en deux phases principales qui se basent sur un critère de débit :

- le partitionnement des liens de communication entre des liens utilisant un mode d'accès multiple de type TDMA et des liens utilisant un mode d'accès multiple de type NOMA, réalisé lors de la deuxième étape 202 à l'aide d'un algorithme itératif, et

- l'optimisation de l'ordonnancement des liens de communication, réalisée lors de la troisième étape 203, pouvant être résolue de manière optimale et très peu complexe.

Le procédé selon l'invention peut être mis en œuvre au sein d'un cluster dans un réseau ad hoc. Tous les nœuds communiquent sur le même canal logique, et les deuxième, troisième et quatrième étapes du procédé selon l'invention sont mises en œuvre par un nœud décisionnaire élu dynamiquement. La mise en œuvre du procédé au sein du cluster permet d'améliorer le débit moyen global au sein du cluster, tout en garantissant un débit minimum par lien de communication.

Au sein d'un réseau ad hoc de $K$ clusters, chaque cluster étant nommé $C_k$ et contenant $n_{C_k}$ liens, le procédé peut être mis en œuvre sur un regroupement de $p$ clusters, avec $2 \leq p \leq K$.

Plusieurs cas d'application sont possibles. Dans un premier temps, nous considérons que la ressource spectrale est suffisante, c'est-à-dire que le regroupement de clusters a accès à $p$ canaux logiques distincts. Dans ce cas, il est possible d'allouer un canal logique à chaque cluster, et d'appliquer le procédé de détermination d'un mode d'accès multiple et d'ordonnancement selon l'invention sur chacun des clusters indépendamment. Par exemple, pour $p = 2$ clusters nommés $C_1$ et $C_2$, les liens de $C_1$ se voient attribuer le canal logique $f_1$ et le nœud décisionnaire de $C_1$ applique le procédé selon l'invention. De même, les liens de $C_2$ communiquent sur le second canal logique $f_2$ et le nœud décisionnaire de $C_2$ applique le procédé selon l'invention indépendamment de $C_1$.

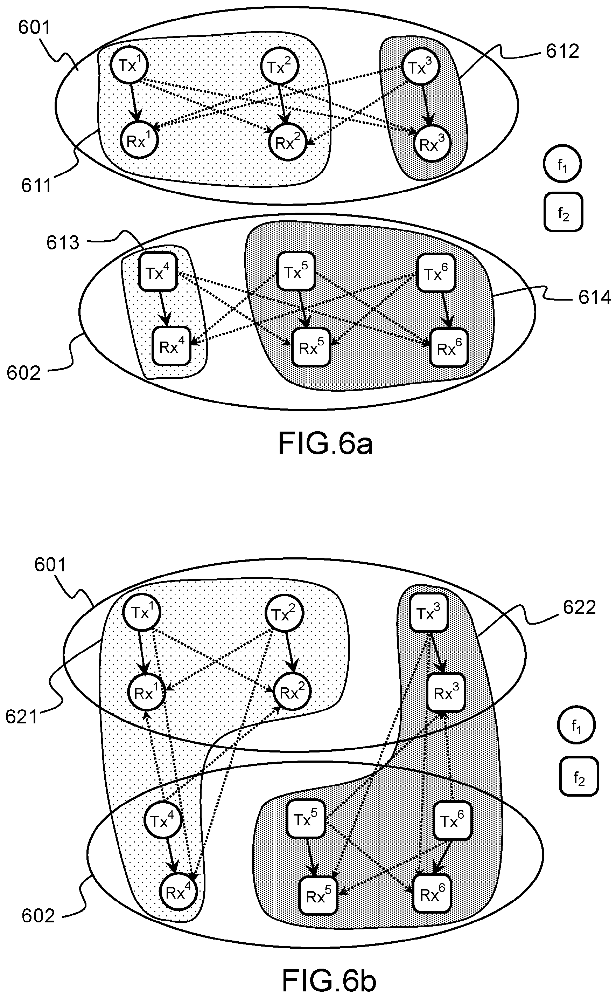

La figure 6a est une illustration du partitionnement des liens de communications opéré par le procédé selon l'invention dans ce premier cas d'application sur $p = 2$ clusters, le cluster $C_1$ 601 et le cluster $C_2$ 602. Chaque cluster comprend six nœuds et trois liens de communication. Suite à la mise en œuvre du procédé, les nœuds du cluster $C_1$ compris dans la zone 611 utilisent un mode d'accès multiple de type NOMA et ceux de la zone 612 utilisent un mode d'accès multiple de type TDMA sur le canal logique $f_1$. De même, les nœuds du cluster $C_2$ compris dans la zone 613 utilisent un mode d'accès multiple de type NOMA et ceux de la zone 614 utilisent un mode d'accès multiple de type TDMA sur le canal logique $f_2$.

Selon un autre mode de réalisation, le problème est analysé de manière globale pour le regroupement des $p$ clusters. A titre d'exemple, on se place dans un cas d'application avec $p = 2$ clusters associés respectivement à un canal logique $f_1$ et $f_2$. Dans ce cas, les ressources peuvent être regroupées entre les deux clusters, le canal logique $f_1$ pouvant être alloué à certains liens des $p$ clusters du regroupement, et le second canal logique $f_2$ pouvant être alloué aux autres liens. Il s'agit donc d'optimiser conjointement le mode d'accès NOMA/TDMA, l'allocation des canaux logiques et l'ordonnancement des liens.

Pour cela, le procédé selon l'invention peut être mis en œuvre de la manière suivante :

- un nœud décisionnaire commun aux p clusters regroupés est élu,

- les informations relatives à la qualité des liens de communication directs et interférents, par exemple des statistiques liées aux canaux de propagation, sont remontées au nœud décisionnaire par les nœuds des clusters, soit directement soit par l'intermédiaire de nœuds intermédiaires. Les liens interférents comprennent les liens entre nœuds de clusters distincts,

- à partir de ces informations, le nœud décisionnaire met en œuvre le procédé de détermination d'un mode d'accès multiple et d'ordonnancement selon l'invention étendu à la gestion conjointe de l'ensemble des canaux logiques et des accès, à savoir en particulier :

    ○ la mise en œuvre de la deuxième étape 202 du procédé sur les liens des deux clusters conjointement, afin de les partitionner entre un ensemble $T_d$ de liens opérés avec un mode d'accès multiple de type TDMA et un ensemble $T_N$ de liens opérés avec un mode d'accès multiple de type NOMA. Cette étape est effectuée en partant du principe que tous les liens communiquent sur le même canal logique. Le calcul des débits peut se faire indifféremment en considérant la bande d'un canal logique ou la bande de l'ensemble des canaux logiques,

    ○ l'allocation d'une partie des canaux logiques (par exemple le canal $f_1$) aux liens de $T_N$ utilisant un accès multiple de type NOMA,

    ○ l'allocation de l'autre partie des canaux logiques (par exemple lecanal $f_2$) aux liens de $T_d$ utilisant un accès TDMA.

- le nœud décisionnaire envoie les paramètres calculés aux nœuds correspondants du réseau.

De manière équivalente, chaque cluster peut élire un nœud décisionnaire pour le cluster, puis les nœuds décisionnaires élisent un nœud décisionnaire commun pour le regroupement de clusters. Les nœuds transmettent les informations sur la qualité des liens de communication au nœud décisionnaire de leur cluster, qui les renvoie au nœud décisionnaire commun. Cette solution permet de limiter les transmissions inter-clusters.

La figure 6b est une illustration de ce deuxième cas d'application du procédé sur un regroupement de $p = 2$ clusters, le cluster $C_1$ 601 et le cluster $C_2$ 602, associés respectivement à un canal logique $f_1$ et $f_2$. Chaque cluster comprend six nœuds et trois liens de communication. Suite à la mise en œuvre du procédé, qui considère ici les interférences liées aux émissions de nœuds appartenant à des clusters différents, les nœuds compris dans la zone 621 utilisent un mode d'accès multiple de type NOMA sur le canal logique $f_1$, et ceux de la zone 622 utilisent un mode d'accès multiple de type TDMA sur le canal logique $f_2$.

Par rapport au précédent mode de réalisation, la solution de gestion conjointe des accès NOMA/TDMA et des canaux logiques présente un meilleur débit global que solution où le procédé est appliqué à chaque cluster indépendamment.

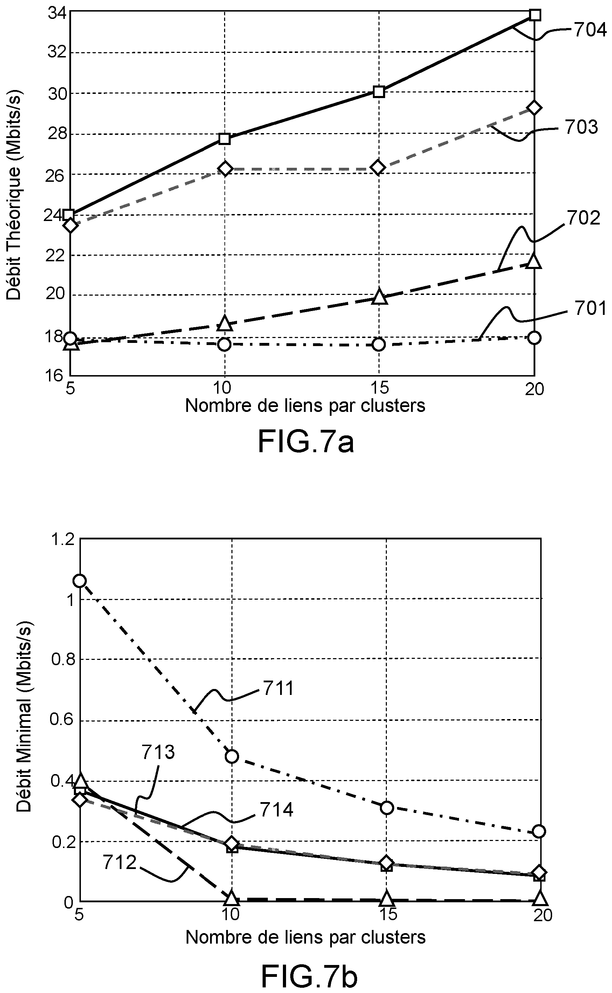

La figure 7a donne le débit théorique moyen obtenu dans le réseau en fonction du nombre de liens de communication, afin de quantifier l'apport du procédé selon l'invention dans un cas d'application où le réseau comprend p = 2 clusters et deux canaux logiques $f_1$ et $f_2$. Il s'agit d'un débit théorique global (somme des débits de l'ensemble des liens) obtenu en considérant un canal logique de largeur de bande $W_b$ égal à 1 MHz. La courbe 701 représente les performances obtenues en mettant en œuvre une technique d'accès multiple de type TDMA indépendamment sur l'ensemble des liens de communication de chaque cluster, en utilisant un canal logique propre au cluster. La courbe 702 représente le même cas d'application en utilisant une technique d'accès multiple de type NOMA. On observe que l'utilisation du NOMA permet d'obtenir de meilleurs débits moyens que le TDMA lorsque le nombre de liens de communication augmente. La courbe 703 représente les performances obtenues en mettant en œuvre le procédé selon l'invention indépendamment sur chacun des clusters. On observe que la mise en œuvre du procédé selon l'invention améliore considérablement les débits par rapport aux solutions basées sur l'utilisation du TDMA ou du NOMA. Enfin, la courbe 704 représente les performances obtenues en mettant en œuvre le procédé selon l'invention sur le regroupement des p clusters. On observe que le débit moyen est encore meilleur, en particulier lorsque le nombre de liens de communication augmente.

La figure 7b illustre le débit minimum théorique disponible par lien, dans le même cas d'application que la figure 7a. La courbe 711 correspond au cas d'application de la courbe 701, et respectivement pour les courbes (712, 702), (713, 703) et (714, 704). On observe que le débit minimal disponible dans le cas d'un mode d'accès multiple NOMA s'écroule lorsque le nombre de liens disponibles augmente, et que ce débit minimal est très bon lorsque le mode d'accès multiple est le TDMA. La solution proposée est moins bonne que le TDMA en termes de débit minimum, mais permet de garantir un débit minimal, contrairement à la solution NOMA. Les performances obtenues en mettant en œuvre le procédé selon l'invention sont comparable selon que les clusters sont regroupés ou non.

Un autre cas d'application est celui où la réutilisation spatiale des canaux logiques n'est pas suffisante pour garantir l'orthogonalité entre les liens de communication de clusters différents, c'est-à-dire que le nombre de canaux logiques est inférieur au nombre de clusters. Ce peut être le cas par exemple dans le cas de réutilisation spatiale des canaux de transmission, qui permet de faire fonctionner le réseau avec moins de canaux logiques que de clusters pour peu que la topologie du réseau permette de réutiliser les mêmes canaux dans des clusters suffisamment éloignés. La réutilisation spatiale peut s'avérer ne pas être suffisante lorsque les clusters sont trop proches les uns des autres. Dans ce cas, une solution possible est de mettre en place un multiplexage TDMA entre les clusters. Cependant, cette solution présente le défaut de diviser par $p$ le débit moyen.

Une autre solution est de mettre en œuvre le procédé de détermination d'un mode d'accès multiple et d'ordonnancement selon l'invention sur un regroupement de clusters et de canaux logiques, comme illustré précédemment, même lorsque le nombre de canaux logiques est inférieur au nombre de clusters.

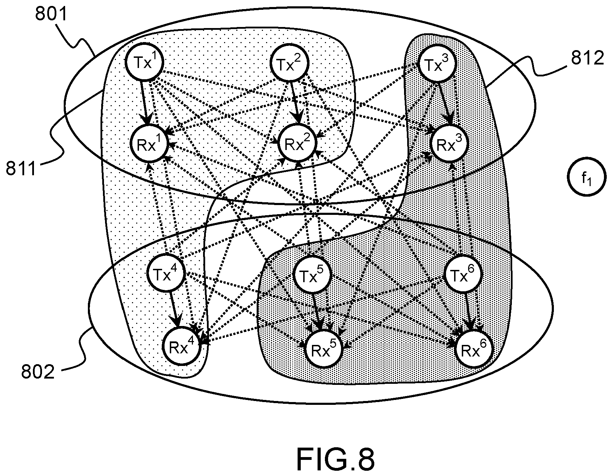

La figure 8 est une illustration de ce cas d'application du procédé sur un regroupement de $p = 2$ clusters, le cluster $C_1$ 801 et le cluster $C_2$ 802, associés tous deux au même canal logique $f_1$. Chaque cluster comprend six nœuds et trois liens de communication. Suite à la mise en œuvre du procédé, qui considère ici les interférences liées aux émissions de nœuds appartenant à des clusters différents, les nœuds compris dans la zone 811 utilisent un mode d'accès multiple de type NOMA et ceux de la zone 812 utilisent un mode d'accès multiple de type TDMA, ordonnancés sur le canal logique $f_1$.

Les avantages de ce mode de réalisation sont qu'il permet d'obtenir un bien meilleur débit théorique global qu'une solution basée sur un mode d'accès de type TDMA entre les nœuds des différents clusters, et qu'il garantit un débit minimum, contrairement à une solution basée sur un mode d'accès de type NOMA où le débit minimum tend vers zéro quand le nombre de liens de communication augmente.

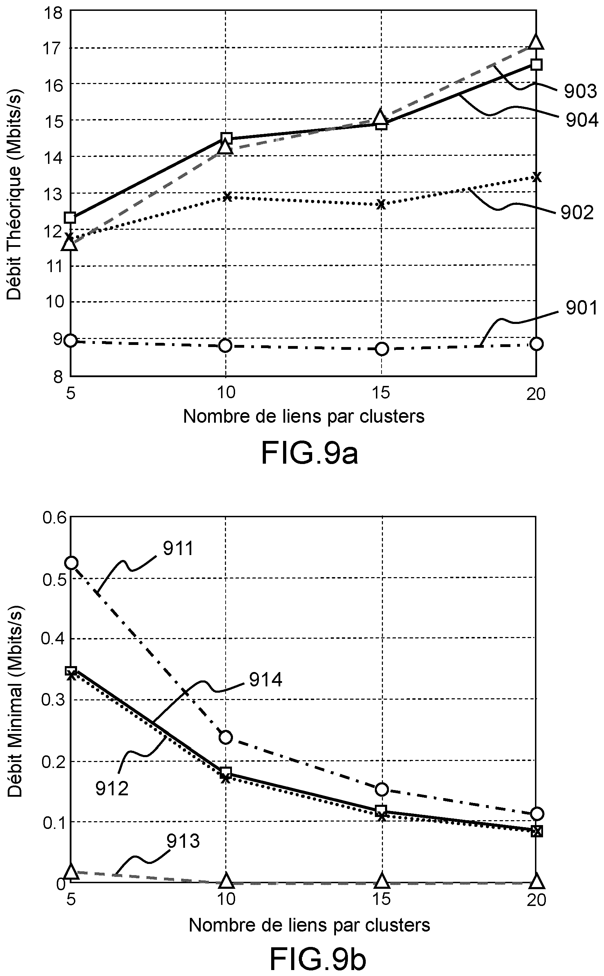

La figure 9a donne les débits moyens théoriques obtenus afin de quantifier l'apport du procédé selon l'invention dans un cas d'application où le réseau comprend $p = 2$ clusters et un seul canal logique $f_1$. Le graphique donne le débit théorique moyen obtenu dans le réseau en fonction du nombre de liens de communication. La courbe 901 représente les performances obtenues en mettant en œuvre une technique d'accès multiple de type TDMA sur l'ensemble des liens de communication des clusters, en répartissant à parts égales l'utilisation du canal logique entre les deux clusters (round-robin). La courbe 902 représente le même cas d'application en optimisant l'ordonnancement des ressources des deux clusters sur le canal logique de manière à maximiser le débit global. La courbe 903 représente le même cas d'application en utilisant une technique d'accès multiple de type NOMA. On observe que l'utilisation du NOMA permet d'obtenir de meilleurs débits moyens que le TDMA, même optimisé, en particulier lorsque le nombre de liens de communication augmente. La courbe 904 représente les performances obtenues en mettant en œuvre le procédé selon l'invention sur le regroupement des deux clusters. On observe que la mise en œuvre du procédé selon l'invention améliore considérablement les débits par rapport aux solutions basées sur l'utilisation du TDMA, optimisé ou non. Les performances obtenues sont comparables à celles obtenues lorsque les liens de communication utilisent tous un accès multiple de type NOMA.

La figure 9b illustre le débit minimum théorique disponible par lien, dans le même cas d'application que la figure 9a. La courbe 911 correspond au cas d'application de la courbe 901, et respectivement pour les courbes (912,902), (913, 903) et (914, 904). On observe que le débit minimal disponible dans le cas d'un mode d'accès multiple NOMA s'écroule lorsque le nombre de liens disponibles augmente, alors qu'il est très bon lorsque le mode d'accès multiple est de type TDMA. La solution proposée est légèrement moins bonne que celle basée sur le TDMA non optimisé, mais elle permet de garantir un débit minimal, contrairement à la solution basée sur le NOMA.

Les performances présentées aux figures 7a, 7b, 9a et 9b sont données à titre d'illustration pour des cas d'application particuliers où le nombre $p$ de clusters est égal à deux. Cependant, l'invention s'applique de manière comparable pour le regroupement d'un nombre de clusters supérieur à deux.

L'invention porte donc sur un procédé de détermination d'un mode d'accès multiple et d'ordonnancement pour une pluralité de liens de communication dans un réseau ad hoc, mais également sur un nœud dans un réseau ad hoc, comprenant des moyens de calcul tels que par exemple un microprocesseur, un DSP (sigle anglais pour *Digital Signal Processor,* ou processeur de signal numérique), un FPGA (sigle anglais pour *Field Programmable Gate Array,* ou réseau de portes programmable), un ASIC (acronyme anglais pour *Application-Specific Integrated Circuit,* ou circuit intégré propre à une application), n'importe quelle association de ces moyens, ou n'importe quel composant matériel lui permettant de mettre en œuvre les étapes de l'invention lui permettant de jouer le rôle de nœud décisionnaire responsable de la détermination du mode d'accès entre un mode d'accès NOMA et un mode d'accès TDMA pour chacun des liens de communication, et de l'ordonnancement de ces liens de communication.

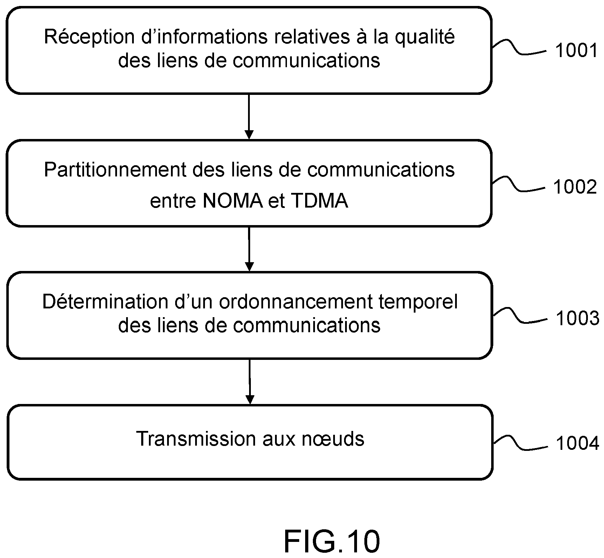

La figure 10 est un diagramme synoptique des étapes d'un procédé de détermination d'un mode d'accès multiple et d'ordonnancement selon l'invention mises en œuvre par un nœud décisionnaire. Ces étapes comprennent une première étape (1001) de réception, depuis des nœuds impliqués dans les liens de communication, d'informations relatives à la qualité de liens de communication opérés entre des nœuds du réseau ad hoc, chaque lien de communication étant réalisé entre des nœuds appartenant à un même cluster, et des étapes successives 1002, 1003 et 1003 correspondant aux deuxième (202), troisième (203) et quatrième (204) étapes du procédé selon l'invention décrit à la figure 2.

## Revendications

1. Procédé de détermination d'un mode d'accès multiple et d'ordonnancement pour une pluralité de liens de communication dans un réseau ad hoc comprenant une pluralité de nœuds regroupés dans un ou plusieurs clusters, les liens de communication étant opérés sur au moins un canal logique, le procédé comprenant

   - une première étape (201), mise en œuvre par lesdits nœuds, de transmission à un nœud désigné comme nœud décisionnaire, d'informations relatives à une qualité desdits liens de communication,
   - une deuxième étape (202), mise en œuvre par ledit nœud décisionnaire, de partitionnement desdits liens de communication entre des liens de communication utilisant un accès multiple de type NOMA et des liens de communication utilisant un accès multiple de type TDMA, sur un critère de débit calculé à partir des informations relatives à la qualité desdits liens de communication transmises à la première étape (201),
   - une troisième étape (203), mise en œuvre par ledit nœud décisionnaire, de détermination d'un ordonnancement temporel desdits liens de communication sur ledit au moins un canal logique, en respectant les types d'accès multiples calculés lors de la deuxième étape,
   - une quatrième étape (204), mise en œuvre par ledit nœud décisionnaire, de transmission des informations de partitionnement calculées à la deuxième étape et des informations d'ordonnancement temporel calculées à la troisième étape aux nœuds impliqué dans lesdits liens de communication.

2. Procédé de détermination d'un mode d'accès multiple et d'ordonnancement selon la revendication 1, dans lequel les informations relatives à une qualité des liens de communication sont, pour chaque lien de communication :

   - des informations statistiques sur un canal de propagation dudit lien de communications,

- des informations statistiques sur des canaux de propagation interférents, et
- un niveau de puissance de bruit perçu par le nœud destinataire du lien de communication.

3. Procédé de détermination d'un mode d'accès multiple et d'ordonnancement selon l'une des revendications précédentes, dans lequel la deuxième étape (202) de partitionnement desdits liens de communication comprend la mise en œuvre d'un algorithme itératif comprenant, pour chaque lien de communication, le calcul d'un débit utilisateur en utilisant un mode d'accès multiple de type TDMA, le calcul d'un débit utilisateur en utilisant un mode d'accès multiple de type NOMA compte tenu des modes d'accès multiples utilisés par les autres liens de communications, et le choix du mode d'accès maximisant le débit utilisateur du lien de communications.

4. Procédé de détermination d'un mode d'accès multiple et d'ordonnancement selon l'une des revendications précédentes, dans lequel la deuxième étape (202) de partitionnement desdits liens de communication comprend :

- une étape (301) de calcul d'un débit utilisateur pour chaque lien de communication lorsque tous les liens de communication sont associés à un accès multiple de type TDMA,
- une étape (302) de calcul d'un débit utilisateur pour chaque lien de communication lorsque tous les liens de communication sont associés à un accès multiple de type NOMA,
- une étape (303) de détermination d'un ensemble $T_N$ de liens de communication associés à un accès multiple de type NOMA et d'un ensemble $T_d$ de liens de communication associés à un accès multiple de type TDMA en comparant les débits utilisateur respectifs pour chaque lien de communication,
- itérativement, jusqu'à convergence :

  ◦ une étape (304) de calcul d'un débit utilisateur pour chaque lien de communication de l'ensemble $T_N$ lorsque seul les liens de communication dudit ensemble $T_N$ utilisent un accès multiple de type NOMA,
  ◦ une étape (305) de recherche de liens de communication appartenant à l'ensemble $T_N$ pour lesquels le débit utilisateur pour un accès multiple de type TDMA est supérieur ou égal au débit utilisateur pour un accès multiple de type NOMA, et de transfert desdits liens de communication vers l'ensemble $T_d$ de liens de communications utilisant un accès multiple de type TDMA.

5. Procédé de détermination d'un mode d'accès multiple et d'ordonnancement selon l'une des revendications précédentes, dans lequel la technique d'accès multiple de type NOMA repose sur l'utilisation de codeurs/décodeurs linéaires, et où la deuxième étape (202) de partitionnement desdits liens de communication entre des liens de communication utilisant un accès multiple de type NOMA et des liens de communication utilisant un accès multiple de type TDMA sur un critère de débit comprend le calcul d'une taille $r$ de codeur/décodeur linéaire et le calcul de matrices de codage/décodage **U** et **V** adaptées au nombre de liens de communication utilisant un accès multiple de type NOMA.

6. Procédé de détermination d'un mode d'accès multiple et d'ordonnancement selon l'une des revendications précédentes, dans lequel la troisième étape (203) de partitionnement desdits liens de communication comprend la définition d'un intervalle temporel long, ou trame, découpé en une pluralité $L$ d'intervalles temporels courts, ou slots, et de répartition desdits $L$ slots entre les liens de communication afin de maximiser le débit global moyen du réseau de communication ad hoc tout en garantissant un débit minimal pour chaque lien de communication.

7. Procédé de détermination d'un mode d'accès multiple et d'ordonnancement selon la revendication précédente, dans lequel $\left\lceil \frac{LR_0^u}{R_k^\varphi} \right\rceil$ slots sont attribués exclusivement à chaque lien de communication utilisant un accès multiple de type TDMA, avec $R_0^u$ une contrainte de débit minimum par lien et $R_k^\varphi$ un débit physique associé au lien de communication, $\left\lceil \frac{LR_0^u}{\overline{R}_{\text{NOMA,min}}^\varphi} \right\rceil$ slots sont attribués aux liens de communication utilisant un accès multiple de type NOMA, et où les slots résiduels sont répartis entre les liens de communications utilisant un accès multiple de type NOMA et le lien de communication utilisant un accès multiple de type TDMA présentant le débit physique $R_k^\varphi$ le plus élevé.

8. Procédé de détermination d'un mode d'accès multiple et d'ordonnancement selon l'une des revendications 6 et 7, dans lequel la troisième étape (203) de partitionnement desdits liens de communication comprend en outre le calcul d'une longueur de trame *L\** optimale compte tenu des résultats de la deuxième étape (202) de partitionnement des liens de communication.

9. Procédé de détermination d'un mode d'accès multiple et d'ordonnancement selon l'une des revendications précédentes, mis en œuvre conjointement sur une pluralité de clusters.

10. Nœud décisionnaire pour un réseau ad hoc comprenant une pluralité de nœuds regroupés dans un ou plusieurs clusters et mettant en œuvre une pluralité de liens de communication sur au moins un canal logique, ledit nœud décisionnaire étant comprenant des moyens de calcul configurés pour mettre en œuvre :

- une première étape (1001) de réception d'informations relatives à une qualité desdits liens de communication,
- une deuxième étape (1002) de partitionnement desdits liens de communication entre des liens de communication utilisant un accès multiple de type NOMA et des liens de communication utilisant un accès multiple de type TDMA, sur un critère de débit calculé à partir des informations relatives à la qualité desdits liens de communication reçues à la première étape (201),
- une troisième étape (1003) de détermination d'un ordonnancement temporel desdits liens de communication sur ledit au moins un canal logique, en respectant les types d'accès multiples calculés lors de la deuxième étape, -
une quatrième étape (1004) de transmission des informations de partitionnement calculées à la deuxième étape et des informations d'ordonnancement temporel calculées à la troisième étape aux nœuds impliqué dans lesdits liens de communication.

**Patentansprüche**

1. Verfahren zur Bestimmung eines Mehrfachzugangsmodus und einer Ablaufplanung für eine Vielzahl von Kommunikationsverbindungen in einem Ad-hoc-Netzwerk, das eine Vielzahl von Knoten umfasst, die in einem oder mehreren Clustern gruppiert sind, wobei die Kommunikationsverbindungen auf mindestens einem logischen Kanal betrieben werden, wobei das Verfahren umfasst:

- einen ersten Schritt (201), der von den Knoten eingesetzt wird, der Übertragung von Informationen in Bezug auf eine Qualität der Kommunikationsverbindungen an einen Knoten, der als Entscheidungsknoten designiert wird,
- einen zweiten Schritt (202), der von dem Entscheidungsknoten eingesetzt wird, der Partitionierung der Kommunikationsverbindungen zwischen Kommunikationsverbindungen, die einen Mehrfachzugang vom Typ NOMA verwenden, und Kommunikationsverbindungen, die einen Mehrfachzugang vom Typ TDMA verwenden, gemäß einem Durchsatzkriterium, das ausgehend von den Informationen in Bezug auf die Qualität der Kommunikationsverbindungen berechnet wird, die im ersten Schritt (201) übertragen werden;
- einen dritten Schritt (203), der von dem Entscheidungsknoten eingesetzt wird, der Bestimmung einer zeitlichen Ablaufplanung der Kommunikationsverbindungen auf dem mindestens einen logischen Kanal, unter Beachtung der im zweiten Schritt berechneten Mehrfachzugangstypen,
- einen vierten Schritt (204), der von dem Entscheidungsknoten eingesetzt wird, der Übertragung der im zweiten Schritt berechneten Informationen zur Partitionierung und der im dritten Schritt berechneten Informationen zur zeitlichen Ablaufplanung an die in den Kommunikationsverbindungen beteiligten Knoten.

2. Verfahren zur Bestimmung eines Mehrfachzugangsmodus und einer Ablaufplanung nach Anspruch 1, wobei die Informationen in Bezug auf eine Qualität der Kommunikationsverbindungen für jede Kommunikationsverbindung Folgendes sind:

statistische Informationen über einen Ausbreitungskanal der Kommunikationsverbindungen,
statistische Informationen über die interferierenden Ausbreitungskanäle, und
ein Stärkepegel des Rauschens, das von dem Zielknoten der Kommunikationsverbindung wahrgenommen wird.

3. Verfahren zur Bestimmung eines Mehrfachzugangsmodus und einer Ablaufplanung nach einem der vorstehenden Ansprüche, wobei der zweite Schritt (202) der Partitionierung der Kommunikationsverbindungen den Einsatz eines iterativen Algorithmus umfasst, der für jede Kommunikationsverbindung die Berechnung eines Benutzerdurchsatzes unter Verwendung eines Mehrfachzugangsmodus vom Typ TDMA, die Berechnung eines Benutzerdurchsatzes unter Verwendung eines Mehrfachzugangsmodus vom Typ NOMA unter Berücksichtigung der von den anderen Kommunikationsverbindungen verwendeten Mehrfachzugangsmodi, und die Auswahl des Zugangsmodus, der den Benutzerdurchsatz der Kommunikationsverbindung maximiert, umfasst.

4. Verfahren zur Bestimmung eines Mehrfachzugangsmodus und einer Ablaufplanung nach einem der vorstehenden Ansprüche, wobei der zweite Schritt (202) der Partitionierung der Kommunikationsverbindungen umfasst:

   - einen Schritt (301) der Berechnung eines Benutzerdurchsatzes für jede Kommunikationsverbindung, wenn alle Kommunikationsverbindungen einem Mehrfachzugangsmodus vom Typ TDMA zugeordnet sind,
   - einen Schritt (302) der Berechnung eines Benutzerdurchsatzes für jede Kommunikationsverbindung, wenn alle Kommunikationsverbindungen einem Mehrfachzugangsmodus vom Typ NOMA zugeordnet sind,
   - einen Schritt (303) der Bestimmung einer Gesamtheit $T_N$ von Kommunikationsverbindungen, die einem Mehrfachzugangsmodus vom Typ NOMA zugeordnet sind, und einer Gesamtheit $T_d$ von Kommunikationsverbindungen, die einem Mehrfachzugangsmodus vom Typ TDMA zugeordnet sind, indem die jeweiligen Benutzerdurchsätze für jede Kommunikationsverbindung verglichen werden,
   - iterativ, bis zur Konvergenz:

     ◦ einen Schritt (304) der Berechnung eines Benutzerdurchsatzes für jede Kommunikationsverbindung der Gesamtheit $T_N$, wenn nur die Kommunikationsverbindungen der Gesamtheit $T_N$ einen Mehrfachzugangsmodus vom Typ NOMA verwenden,
     ◦ einen Schritt (305) der Suche nach Kommunikationsverbindungen, die zur Gesamtheit $T_N$ gehören, für die der Benutzerdurchsatz für einen Mehrfachzugang vom Typ TDMA größer oder gleich dem Benutzerdurchsatz für einen Mehrfachzugang vom Typ NOMA ist, und der Verlagerung der Kommunikationsverbindungen zur Gesamtheit $T_d$ von Kommunikationsverbindungen, die einen Mehrfachzugang vom Typ TDMA verwenden.

5. Verfahren zur Bestimmung eines Mehrfachzugangsmodus und einer Ablaufplanung nach einem der vorstehenden Ansprüche, wobei die Technik der Mehrfachzugangs vom Typ NOMA auf der Verwendung von linearen Codierern/-Decodierern ruht und wobei der zweite Schritt (202) der Partitionierung der Kommunikationsverbindungen zwischen Kommunikationsverbindungen, die einen Mehrfachzugang vom Typ NOMA verwenden, und Kommunikationsverbindungen, die einen Mehrfachzugang vom Typ TDMA verwenden, gemäß einem Durchsatzkriterium, die Berechnung einer Größe $r$ des linearen Codierers/Decodierers und der Berechnung von Matrizen der Codierung/Decodierung **U** und **V** umfasst, die an die Anzahl von Kommunikationsverbindungen angepasst sind, die einen Mehrfachzugang vom Typ NOMA verwenden.

6. Verfahren zur Bestimmung eines Mehrfachzugangsmodus und einer Ablaufplanung nach einem der vorstehenden Ansprüche, wobei der dritte Schritt (203) der Partitionierung der Kommunikationsverbindungen die Definition einer langen Zeitspanne oder Datenübertragungslänge, die in eine Vielzahl $L$ von kurzen Zeitspannen oder Schlitzen aufgeteilt wird, und von Verteilung der $L$ Schlitze zwischen den Kommunikationsverbindungen zum Maximieren des durchschnittlichen globalen Durchsatzes des Ad-hoc-Kommunikationsnetzwerks bei gleichzeitigem Sicherstellen eines minimalen Durchsatzes für jede Kommunikationsverbindung umfasst.

7. Verfahren zur Bestimmung eines Mehrfachzugangsmodus und einer Ablaufplanung nach dem vorstehenden Anspruch, wobei $\left\lceil \frac{LR_0^u}{R_k^\varphi} \right\rceil$ Schlitze ausschließlich jeder Kommunikationsverbindung zugewiesen werden, die einen Mehrfachzugang vom Typ TDMA verwendet, wobei $R_0^u$ eine Einschränkung für den minimalen Durchsatz pro Verbindung und $R_k^\varphi$ ein der Kommunikationsverbindung zugeordneten physikalischen Durchsatz ist, $\left\lceil \frac{LR_0^u}{\overline{R}_{NOMA,min}^\varphi} \right\rceil$ Schlitze den Kommunikationsverbindungen zugeordnet sind, die einen Mehrfachzugang vom Typ NOMA verwenden, und wobei die verbleibenden Schlitze zwischen den Kommunikationsverbindungen, die einen Mehrfachzugang vom Typ NOMA verwenden, verteilt sind, und die Kommunikationsverbindung, die einen Mehrfachzugang vom Typ TDMA verwendet, den höchsten physikalischen Durchsatz $R_k^\varphi$ aufweist.

8. Verfahren zur Bestimmung eines Mehrfachzugangsmodus und einer Ablaufplanung nach einem der Ansprüche 6 und 7, wobei der dritte Schritt (203) der Partitionierung der Kommunikationsverbindungen weiter die Berechnung einer optimalen Datenübertragungslänge $L^*$ unter Berücksichtigung der Ergebnisse des zweiten Schritts (202) der Partitionierung der Kommunikationsverbindungen umfasst.

9. Verfahren zur Bestimmung eines Mehrfachzugangsmodus und einer Ablaufplanung nach einem der vorstehenden Ansprüche, das zusammen auf einer Vielzahl von Clustern eingesetzt wird.

10. Entscheidungsknoten für ein Ad-hoc-Netzwerk, umfassend eine Vielzahl von Knoten, die in einem oder mehreren Clustern gruppiert sind und eine Vielzahl von Kommunikationsverbindungen auf mindestens einem logischen Kanal einsetzen, wobei der Entscheidungsknoten Berechnungsmittel umfasst, die konfiguriert sind, um Folgendes einzusetzen:

- einen ersten Schritt (1001) des Empfangs von Informationen in Bezug auf eine Qualität der Kommunikationsverbindungen,
- einen zweiten Schritt (1002) der Partitionierung der Kommunikationsverbindungen zwischen Kommunikationsverbindungen, die einen Mehrfachzugang vom Typ NOMA verwenden, und Kommunikationsverbindungen, die einen Mehrfachzugang vom Typ TDMA verwenden, gemäß einem Durchsatzkriterium, das ausgehend von den Informationen in Bezug auf die Qualität der Kommunikationsverbindungen berechnet wird, die im ersten Schritt (201) empfangen werden,
- einen dritten Schritt (1003) der Bestimmung einer zeitlichen Ablaufplanung der Kommunikationsverbindungen auf dem mindestens einen logischen Kanal unter Beachtung der im zweiten Schritt berechneten Mehrfachzugangstypen,
- einen vierten Schritt (1004) der Übertragung der im zweiten Schritt berechneten Partitionierung und der im dritten Schritt berechneten Informationen zur zeitlichen Ablaufplanung an die in den Kommunikationsverbindungen beteiligten Knoten.

## Claims

1. Multiple access mode determination and scheduling method for a plurality of communication links in an ad-hoc network comprising a plurality of nodes grouped together into one or more clusters, the communication links being operated on at least one logical channel, the method comprising

- a first step (201), implemented by said nodes, of transmitting, to a node designated as decision-making node, information relating to a quality of said communication links,
- a second step (202), implemented by said decision-making node, of partitioning said communication links between communication links using NOMA multiple access and communication links using TDMA multiple access, based on a data rate criterion computed on the basis of the information relating to the quality of said communication links transmitted in the first step (201),
- a third step (203), implemented by said decision-making node, of determining a temporal scheduling of said communication links on said at least one logical channel, while complying with the types of multiple access computed in the second step,
- a fourth step (204), implemented by said decision-making node, of transmitting the partitioning information computed in the second step and the temporal scheduling information computed in the third step to the nodes involved in said communication links.

2. Multiple access mode determination and scheduling method according to Claim 1, wherein the information relating to a quality of the communication links is, for each communication link:

- statistical information regarding a propagation channel of said communication link,
- statistical information regarding interfering propagation channels, and
- a noise power level perceived by the destination node of the communication link.

3. Multiple access mode determination and scheduling method according to either of the preceding claims, wherein the second step (202) of partitioning said communication links comprises implementing an iterative algorithm comprising, for each communication link, computing a user data rate using a TDMA multiple access mode, computing a user data rate using a NOMA multiple access mode taking into account the multiple access modes used by the other communication links, and choosing the access mode that maximizes the user data rate of the communication link.

4. Multiple access mode determination and scheduling method according to one of the preceding claims, wherein the second step (202) of partitioning said communication links comprises:

- a step (301) of computing a user data rate for each communication link when all of the communication links are associated with TDMA multiple access,
- a step (302) of computing a user data rate for each communication link when all of the communication links are associated with NOMA multiple access,
- a step (303) of determining a set $T_N$ of communication links associated with NOMA multiple access and a set $T_d$ of communication links associated with TDMA multiple access by comparing the respective user data rates for each communication link,
- iteratively, until convergence is achieved:

  ◦ a step (304) of computing a user data rate for each communication link of the set $T_N$ when only the communication links of said set $T_N$ use NOMA multiple access,
  ◦ a step (305) of searching for communication links belonging to the set $T_N$ for which the user data rate for TDMA multiple access is greater than or equal to the user data rate for NOMA multiple access, and transferring said communication links to the set $T_d$ of communication links using TDMA multiple access.

**5.** Multiple access mode determination and scheduling method according to one of the preceding claims, wherein the NOMA multiple access technique is based on the use of linear encoders/decoders, and in which the second step (202) of partitioning said communication links between communication links using NOMA multiple access and communication links using TDMA multiple access based on a data rate criterion comprises computing a linear encoder/decoder size $r$ and computing encoding/decoding matrices **U** and **V** adapted to the number of communication links using NOMA multiple access.

**6.** Multiple access mode determination and scheduling method according to one of the preceding claims, wherein the third step (203) of partitioning said communication links comprises defining a long time interval, or frame, divided into a plurality $L$ of short time intervals, or slots, and of distributing said $L$ slots between the communication links so as to maximize the average overall data rate of the ad-hoc communication network while at the same time guaranteeing a minimum data rate for each communication link.

**7.** Multiple access mode determination and scheduling method according to the preceding claim, wherein $\left\lceil \frac{LR_0^u}{R_k^\varphi} \right\rceil$ slots are assigned exclusively to each communication link using TDMA multiple access, where $R_0^u$ is a minimum data rate constraint per link and $R_k^\varphi$ is a physical data rate associated with the communication link, $\left\lceil \frac{LR_0^u}{\bar{R}_{NOMA,min}^\varphi} \right\rceil$ slots are assigned to the communication links using NOMA multiple access, and in which the remaining slots are distributed between the communication links using NOMA multiple access and the communication link using TDMA multiple access having the highest physical data rate $R_k^\varphi$.

**8.** Multiple access mode determination and scheduling method according to either of Claims 6 and 7, wherein the third step (203) of partitioning said communication links furthermore comprises computing an optimum frame length $L^*$ taking into account the results from the second step (202) of partitioning the communication links.

**9.** Multiple access mode determination and scheduling method according to one of the preceding claims, implemented jointly on a plurality of clusters.

**10.** Decision-making node for an ad-hoc network comprising a plurality of nodes grouped together into one or more clusters and implementing a plurality of communication links on at least one logical channel, said decision-making node comprising computing means configured to implement:

- a first step (1001) of receiving information relating to a quality of said communication links,
- a second step (1002) of partitioning said communication links between communication links using NOMA multiple access and communication links using TDMA multiple access, based on a data rate criterion computed on the basis of the information relating to the quality of said communication links received in the first step (201),

- a third step (1003) of determining a temporal scheduling of said communication links on said at least one logical channel, while complying with the types of multiple access computed in the second step,
- a fourth step (1004) of transmitting the partitioning information computed in the second step and the temporal scheduling information computed in the third step to the nodes involved in said communication links.

FIG.1

Transmission d'informations relatives à la qualité des liens de communications — 201

Partitionnement des liens de communications entre NOMA et TDMA — 202

Détermination d'un ordonnancement temporel des liens de communications — 203

Transmission aux nœuds — 204

FIG.2

Calcul des débits en considérant un accès
TDMA pour tous les liens — 301

Calcul des débits en considérant un accès
NOMA pour tous les liens — 302

Détermination des ensembles de liens
NOMA et TDMA sur un critère de débit — 303

Recalcul des débits pour les liens NOMA — 304

Ajustement des ensembles de lien NOMA
et TDMA sur un critère de débit — 305

FIG.3

$$\overline{R}^u_{NOMA,2} \leq \overline{R}^u_{RRTDMA,2}$$

$$\overline{R}^u_{NOMA,1} > \overline{R}^u_{RRTDMA,1}$$

$$\overline{R}^u_{NOMA,3} \leq \overline{R}^u_{RRTDMA,3}$$

$$\overline{R}^u_{NOMA,4} > \overline{R}^u_{RRTDMA,4}$$

$$\overline{R}^u_{NOMA,5} \leq \overline{R}^u_{RRTDMA,5}$$

FIG.4

FIG.5

FIG.6a

FIG.6b

FIG.7a

FIG.7b

FIG.8

FIG.9a

FIG.9b

Réception d'informations relatives à la qualité
des liens de communications — 1001

Partitionnement des liens de communications
entre NOMA et TDMA — 1002

Détermination d'un ordonnancement temporel
des liens de communications — 1003

Transmission aux nœuds — 1004

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. V. BHAT** ; **M. MOTANI** ; **T. J. LIM**. Hybrid NOMA for an Energy Harvesting MAC With Non-Ideal Batteries and Circuit Power. *IEEE Transactions on Wireless Communications*, August 2019, vol. 18 (8), 3961-3973
- Resource Allocation Technique for Hybrid TDMA-NOMA System with Opportunistic Time Assignment. **WEI XINCHEN et al.** 2020 IEEE INTERNATIONAL CONFERENCE ON COMMUNICATIONS WORKSHOPS (ICC WORKSHOPS). IEEE, 07 June 2020, 1-6
- **X. LETURC** ; **P. CIBLAT** ; **C. J. LE MARTRET**. Estimation of the Ricean K-factor from noisy complex channel coefficients. *2016 50th Asilomar Conference on Signals, Systems and Computers*, 2016, 1092-1096
- **X. LETURC et al.** Estimation of the Ricean K Factor in the Presence of Shadowing. *IEEE Communications Letters*, January 2020, vol. 24 (1), 108-112
- ayleigh Channel Statistics Estimation Using SINR Samples Under Single Interference. **D. JIA** ; **X. LETURC** ; **M. ASSAAD** ; **C. L. MARTRET**. 2022 IEEE 95th Vehicular Technology Conference. Spring, 2022, 1-5